(19) Europäisches Patentamt
European Patent Office
Office européen des brevets

(11) **EP 3 096 313 A1**

(12) **EUROPEAN PATENT APPLICATION**

(43) Date of publication:
**23.11.2016 Bulletin 2016/47**

(51) Int Cl.:
***G09G 5/00*** *(2006.01)*

(21) Application number: **16170407.7**

(22) Date of filing: **19.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.05.2015 KR 20150072146**

(71) Applicant: **Samsung Electronics Co., Ltd.
Gyeonggi-do 16677 (KR)**

(72) Inventors:
• **Park, Minkyu
Seoul (KR)**
• **Jeon, Kwangha
Namyangju-si (KR)**
• **Pang, Jeong-Hyun
Seongnam-si (KR)**
• **Hwang, Min Kyung
Seoul (KR)**

(74) Representative: **Nederlandsch Octrooibureau
P.O. Box 29720
2502 LS The Hague (NL)**

(54) **ELECTRONIC DEVICE AND SCREEN DISPLAY METHOD THEREOF**

(57) An electronic device and a method of displaying a screen are provided. The electronic device includes configuring to determine content, generate a blurred background image by reversing at least one area of the content from the content, and display the content and the background image on the screen. Other embodiments are possible.

FIG.7

**Description**

<u>**TECHNICAL FIELD**</u>

The present disclosure relates to an electronic device and an operating method thereof. More particularly, the present disclosure relates to an electronic device having a display unit and a screen display method thereof.

<u>**BACKGROUND**</u>

Electronic devices may perform complex functions through a combination of various functions. For example, the electronic devices may perform mobile communication functions, data communication functions, image photographing functions, audio recording functions, etc. The electronic devices may store and manage various types of content. The electronic devices include display units and may display screens through the display units. The electronic devices may display the content on the screens. The electronic devices may display background images, together with the content, on the screens.

The borders between the content and the background images may be clearly visible on the screens of the electronic devices. Namely, users of the electronic devices may sense of a difference between the content and the background images on the screens.

Embodiments of the present disclosure provide an electronic device and a screen display method thereof that can reduce the sense of difference between the content and a background image on a screen.

The above information is presented as background information only to assist with an understanding of the present disclosure. No determination has been made, and no assertion is made, as to whether any of the above might be applicable as prior art with regard to the present disclosure.

<u>**SUMMARY**</u>

Aspects of the present disclosure are to address at least the above-mentioned problems and/or disadvantages and to provide at least the advantages described below. Accordingly, an aspect of the present disclosure is to provide a method of displaying a screen in an electronic device.

In accordance with an aspect of the present disclosure, a method of displaying a screen in an electronic device is provided. The method includes determining content generating a blurred background image by reversing at least one area of the content from the content and displaying the content and the background image on the screen.

In accordance with another aspect of the present disclosure, an electronic device is provided. The electronic device includes a display, a processor electrically connected to the display, and a memory electrically connected to the processor, wherein the memory stores instructions that configure the processor, when being executed, to generate a second image that has a mirror image for a part of a first image stored in the memory and is subjected to blurring, display the first image on a part of the screen of the display, and display the second image on a part of the screen of the display such that the second image abuts at least a part of an edge of the displayed first image.

The electronic device and the method of displaying a screen thereof, according to the embodiments of the present disclosure, can generate a background image from content, thereby reducing the sense of difference between the content and the background image on a screen.

Furthermore, the electronic device and the method of displaying a screen thereof, according to the embodiments of the present disclosure, can prevent the border between content and a background image from being clearly visible on a screen.

In addition, the electronic device and the method of displaying a screen thereof, according to the embodiments of the present disclosure, can provide, to a user, content and a background image on a screen in a similar mood (atmosphere).

Other aspects, advantages, and salient features of the disclosure will become apparent to those skilled in the art from the following detailed description, which, taken in conjunction with the annexed drawings, discloses various embodiments of the present disclosure.

<u>**BRIEF DESCRIPTION OF THE DRAWINGS**</u>

The above and other aspects, features, and advantages of certain embodiments of the present disclosure will be more apparent from the following description taken in conjunction with the accompanying drawings, in which:

FIG. 1 illustrates a network environment system according to various embodiments of the present disclosure;
FIG. 2 is a block diagram of an electronic device according to various embodiments of the present disclosure;

FIG. 3 is a block diagram of a programming module according to various embodiments of the present disclosure;

FIG. 4 is a block diagram of an electronic device according to various embodiments of the present disclosure;

FIGS. 5 and 6 illustrate examples of a screen according to various embodiments of the present disclosure;

FIG. 7 is a flowchart illustrating a method of displaying a screen according to various embodiments of the present disclosure;

FIGS. 8 to 10 are flowcharts illustrating examples of the content determining operation of FIG. 7, according to various embodiments of the present disclosure;

FIG. 11 is a flowchart illustrating the operation of generating a background image in FIG. 7, according to various embodiments of the present disclosure;

FIGS. 12A to 17C illustrate examples of the background image generating operation of FIG. 7, according to various embodiments of the present disclosure;

FIGS. 18 to 22 are flowcharts illustrating examples of the background image generating operation of FIG. 7, according to various embodiments of the present disclosure; and

FIGS. 23 to 25 are flowcharts illustrating an operation of displaying a screen, according to various embodiments of the present disclosure.

Throughout the drawings, it should be noted that like reference numbers are used to depict the same or similar elements, features, and structures.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the description of the drawings, similar reference numerals may be used to designate similar elements. As used herein, singular forms may include plural forms as well unless the context clearly indicates otherwise. In the present disclosure, the expression "A or B", "at least one of A and/or B", or "A/B" may include all possible combinations of the items listed. The expression "a first", "a second", "the first", or "the second" may modify corresponding elements regardless of the order or importance, and is used only to distinguish one element from another element, but does not limit the corresponding elements. When an element (e.g., first element) is referred to as being "(functionally or communicatively) connected," or "directly coupled" to another element (second element), the element may be connected directly to the another element or connected to the another element through yet another element (e.g., third element).

The expression "configured to" as used in various embodiments of the present disclosure may be interchangeably used with, for example, "suitable for", "having the capacity to", "designed to", "adapted to", "made to", or "capable of" in terms of hardware or software, according to circumstances. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

An electronic device according to various embodiments of the present disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a Moving Picture Experts Group phase 1 or phase 2 (MPEG-1 or MPEG-2) audio layer-3 (MP3) player, a mobile medical device, a camera, and a wearable device.

According to various embodiments of the present disclosure, the wearable device may include at least one of an accessory type (e.g., a watch, a ring, a bracelet, an anklet, a necklace, a glasses, a contact lens, or a head-mounted device (HMD)), a fabric or clothing integrated type (e.g., an electronic clothing), a body-mounted type (e.g., a skin pad, or tattoo), and a bio-implantable type (e.g., an implantable circuit). In some embodiments of the present disclosure, the electronic device may include at least one of, for example, a television, a digital video disc (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

In other embodiments of the present disclosure, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments of the present disclosure, an electronic device may include at least one of a part of furniture or a building/structure, an electronic board, an electronic signature receiving device, a projector, and various types of measuring instruments (e.g., a water meter, an electric meter, a gas meter, a radio wave meter, and the like). In various embodiments of the present disclosure, the electronic device may be flexible, or may be a combination of one or more of the aforementioned various devices. The electronic device according to one embodiment of the present disclosure is not limited to the above described devices. In the present disclosure, the term "user" may indicate a person using an electronic device or a device (e.g., an artificial intelligence electronic device) using an electronic device.

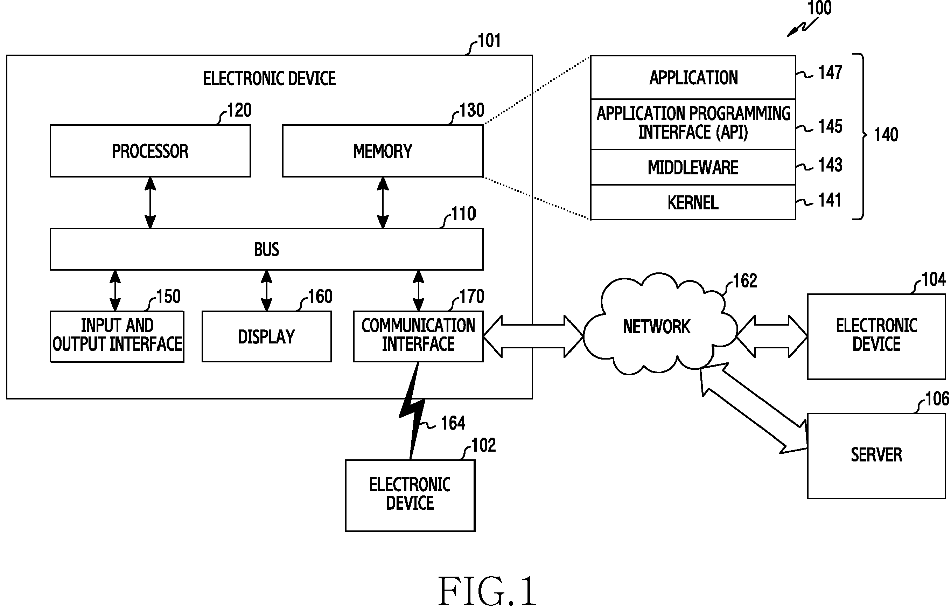

FIG. 1 illustrates an electronic device 101 within a network environment 100 according to various embodiments of the present disclosure.

Referring to FIG. 1, the electronic device 101 may include a bus 110, a processor 120, a memory 130, an input/output interface 150, a display 160, and a communication interface 170. In some embodiments of the present disclosure, the electronic device 101 may omit at least one of the elements, or may further include other elements. The bus 110 may include, for example, a circuit that interconnects the elements 110 to 170 and transfers communication (e.g., control messages and/or data) between the elements. The processor 120 may include one or more of a CP, an AP, and a communication processor (CP). For example, the processor 120 may carry out operations or data processing relating to the control and/or communication of at least one other element of the electronic device 101.

The memory 130 may include a volatile memory and/or a non-volatile memory. The memory 130 may store, for example, instructions or data relating to at least one other element of the electronic device 101. According to an embodiment of the present disclosure, the memory 130 may store software and/or a program 140. The program 140 may include, for example, a kernel 141, middleware 143, an application programming interface (API) 145, and/or application programs (or "applications") 147. At least a part of the kernel 141, the middleware 143, or the API 145 may be referred to as an operating system (OS). For example, the kernel 141 may control or manage system resources (e.g., the bus 110, the processor 120, the memory 130, etc.) that are used to execute operations or functions implemented in the other programs (e.g., the middleware 143, the API 145, and the application programs 147). Furthermore, the kernel 141 may provide an interface through which the middleware 143, the API 145, or the application programs 147 may access the individual elements of the electronic device 101 to control or manage the system resources.

The middleware 143 may function, for example, as an intermediary for allowing the API 145 or the application programs 147 to communicate with the kernel 141 to exchange data. In addition, the middleware 143 may process one or more task requests received from the application programs 147 according to priorities thereof. For example, the middleware 143 may assign priorities for using the system resources (e.g., the bus 110, the processor 120, the memory 130, etc.) of the electronic device 101 to one or more of the application programs 147, and may process the one or more task requests. The API 145 is an interface used by the applications 147 to control a function provided from the kernel 141 or the middleware 143, and may include, for example, at least one interface or function (e.g., instruction) for file control, window control, image processing, text control, etc. For example, the input/output interface 150 may forward instructions or data, which is input from a user or an external device, to the other element(s) of the electronic device 101, or may output instructions or data, which is received from the other element(s) of the electronic device 101, to the user or the external device.

The display 160 may include, for example, a liquid crystal display (LCD), a light emitting diode (LED) display, an organic light emitting diode (OLED) display, a micro electro mechanical system (MEMS) display, or an electronic paper display. The display 160 may display, for example, various types of content (e.g., text, images, videos, icons, and/or symbols) for a user. The display 160 may include a touch screen and may receive, for example, a touch input, a gesture input, a proximity input, or a hovering input using an electronic pen or a user's body part. The communication interface 170 may configure, for example, communication 164 between the electronic device 101 and an external device (e.g., a first external electronic device 102, a second external electronic device 104, or a server 106). For example, the communication interface 170 may be connected to a network 162 through wireless or wired communication to communicate with the external device (e.g., the second external device 104 or the server 106).

The wireless communication may include, for example, a cellular communication that uses at least one of LTE, LTE-Advance (LTE-A), code division multiple access (CDMA), wideband CDMA (WCDMA), universal mobile telecommunications system (UMTS), wireless broadband (WiBro), global system for mobile communications (GSM), etc. According to an embodiment of the present disclosure, the wireless communication may include, for example, at least one of WiFi, Bluetooth, Bluetooth low energy (BLE), Zigbee, near field communication (NFC), magnetic secure transmission, radio frequency, and body area network (BAN). According to an embodiment of the present disclosure, the wired communication may include GNSS. The GNSS may be, for example, a GPS, a global navigation satellite system (Glonass), a Beidou navigation satellite system (hereinafter, referred to as "Beidou"), or Galileo (the European global satellite-based navigation system). Hereinafter, the term "GPS" may be interchangeably used with the term "GNSS" in the present disclosure. The wired communication may include, for example, at least one of a universal serial bus (USB), a high definition multimedia interface (HDMI), recommended standard 232 (RS-232), and a plain old telephone service (POTS). The network 162 may include a telecommunications network, which may be, for example, at least one of a computer network (e.g., a LAN or a WAN), the Internet, and a telephone network.

The first and second external electronic devices 102 and 104 may be the same type as, or a different type than, the electronic device 101. According to various embodiments of the present disclosure, all or some of the operations performed in the electronic device 101 may be performed in another electronic device or in a plurality of electronic devices (e.g., the external electronic devices 102 and 104 or the server 106). According to an embodiment of the present disclosure, in a case where the electronic device 101 has to perform some functions or services automatically or in response to a request, the electronic device 101 may request another device (e.g., the external electronic device 102 or 104 or the server 106) to perform at least some functions relating thereto instead of, or in addition to, performing the functions or services by itself. The other electronic device (e.g., the external electronic device 102 or 104, or the server 106) may execute the requested functions or the additional functions and may deliver the execution result to the electronic device 101. The electronic device 101 may process the received result as it is or additionally to provide the requested functions or services. To achieve this, for example, cloud computing, distributed computing, or client-server computing technology may be used.

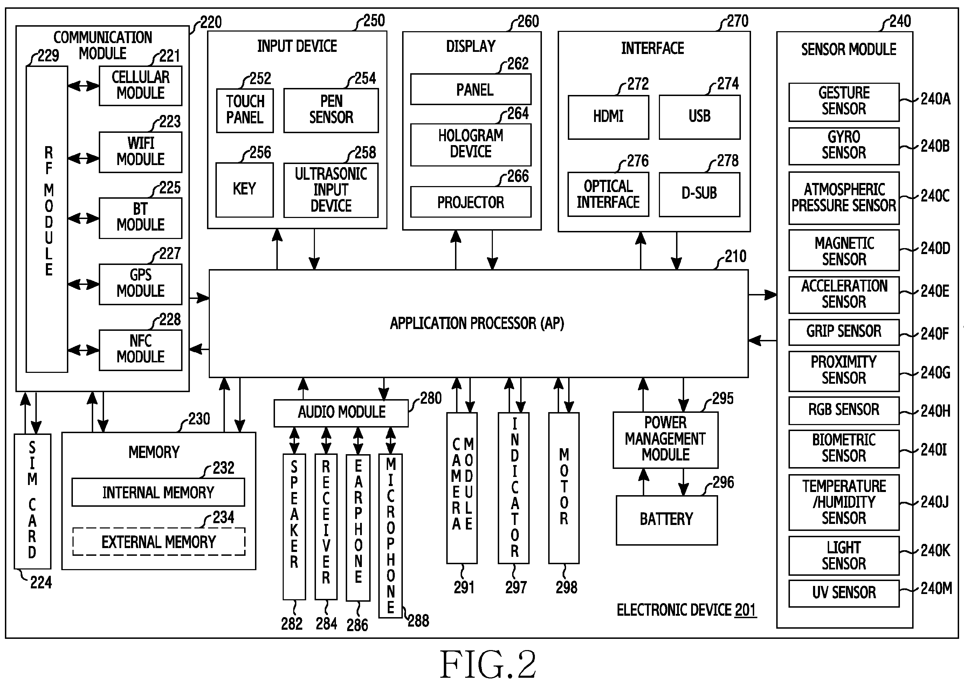

FIG. 2 is a block diagram of an electronic device 201 according to various embodiments of the present disclosure.

Referring to FIG. 2, the electronic device 201 may include, for example, the entirety, or a part, of the electronic device 101 illustrated in FIG. 1. The electronic device 201 may include at least one processor 210 (e.g., an AP), a communication module 220, a subscriber identification module 224, a memory 230, a sensor module 240, an input device 250, a display 260, an interface 270, an audio module 280, a camera module 291, a power management module 295, a battery 296, an indicator 297, and a motor 298. The processor 210 may, for example, control a plurality of hardware or software elements connected thereto and perform various types of data processing and operations by driving an OS or an application program. The processor 210 may be implemented as, for example, a system on chip (SoC).

According to an embodiment of the present disclosure, the processor 210 may further include a graphic processing unit (GPU) and/or an image signal processor. The processor 210 may include at least some (e.g., a cellular module 221) of the elements illustrated in FIG. 2. The processor 210 may load, in a volatile memory, instructions or data received from at least one of the other elements (e.g., a non-volatile memory), process the loaded instructions or data, and store the result data in the non-volatile memory.

The communication module 220 may have a configuration that is the same as, or similar to, that of the communication interface 170. The communication module 220 may include, for example, a cellular module 221, a WiFi module 223, a Bluetooth module 225, a GPS module 227, an NFC module 228, and an RF module 229. The cellular module 221 may provide, for example, a voice call, a video call, a text message service, an Internet service, etc. through a communication network. According to an embodiment of the present disclosure, the cellular module 221 may identify and authenticate the electronic device 201 within a communication network using the subscriber identification module 224 (e.g., a subscriber identification module (SIM) card). According to an embodiment of the present disclosure, the cellular module 221 may perform at least some of the functions that the processor 210 may provide. According to an embodiment of the present disclosure, the cellular module 221 may include a CP.

According to some embodiments of the present disclosure, at least some (two or more) of the cellular module 221, the WiFi module 223, the Bluetooth module 225, the GPS module 227, and the NFC module 228 may be included in one integrated chip (IC) or IC package. The RF module 229 may transmit/receive, for example, a communication signal (e.g., an RF signal). The RF module 229 may include, for example, a transceiver, a power amp module (PAM), a frequency filter, a low noise amplifier (LNA), an antenna, etc. According to another embodiment of the present disclosure, at least one of the cellular module 221, the WiFi module 223, the Bluetooth module 225, the GPS module 227, and the NFC module 228 may transmit/receive an RF signal through a separate RF module. The subscriber identification module 224 may include, for example, a card that includes a subscriber identification module, or an embedded SIM, and may contain unique identification information (e.g., an integrated circuit card identifier (ICCID)) or subscriber information (e.g., international mobile subscriber identity (IMSI)).

The memory 230 (e.g., the memory 130) may include, for example, an internal memory 232 or an external memory 234. The internal memory 232 may include, for example, at least one of a volatile memory (e.g., a dynamic random access memory (DRAM), a static RAM (SRAM), an SDRAM, etc.) and a non-volatile memory (e.g., a one time programmable read only memory (OTPROM), a PROM, an EPROM, an EEPROM, a mask ROM, a flash ROM, a flash memory, a hard disc drive, or a solid state drive (SSD)). The external memory 234 may include a flash drive, for example, a compact flash (CF), a secure digital (SD), a Micro-SD, a Mini-SD, an eXtreme digital (xD), a multi-media card (MMC), a memory stick, etc. The external memory 234 may be functionally or physically connected to the electronic device 201 through various interfaces.

The sensor module 240 may, for example, measure a physical quantity or detect the operating state of the electronic device 201 and may convert the measured or detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green, blue (RGB) sensor), a biometric sensor 240I, a temperature/humidity sensor 240J, an illumination sensor 240K, and a ultraviolet (UV) sensor 240M. Additionally or alternatively, the sensor module 240 may include, for example, an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In some embodiments of the present disclosure, the electronic device 201 may further include a processor configured to control the sensor module 240 as a part of, or separately from, the processor 210 and may control the sensor module 240 while the processor 210 is in a sleep state.

The input device 250 may include, for example, a touch panel 252, a (digital) pen sensor 254, a key 256, or an ultrasonic input device 258. The touch panel 252 may use, for example, at least one of a capacitive type, a resistive type, an infrared type, and an ultrasonic type. Furthermore, the touch panel 252 may further include a control circuit. The touch panel 252 may further include a tactile layer to provide a tactile reaction to a user. The (digital) pen sensor 254 may include, for example, a recognition sheet that is a part of, or separate from, the touch panel. The key 256 may include, for example, a physical button, an optical key, or a keypad. The ultrasonic input device 258 may detect ultrasonic waves, which are generated by an input tool, through a microphone (e.g., a microphone 288) to identify data that correspond to the detected ultrasonic waves.

The display 260 (e.g., the display 160) may include a panel 262, a hologram device 264, a projector 266, and/or a control circuit for controlling them. The panel 262 may be implemented to be, for example, flexible, transparent, or wearable. The panel 262, together with the touch panel 252, may be configured as one or more modules. The hologram device 264 may show a three-dimensional image in the air using an interference of light. The projector 266 may display an image by projecting light onto a screen. The screen may be located, for example, inside or outside the electronic device 201. The interface 270 may include, for example, an HDMI 272, a USB 274, an optical interface 276, or a D-subminiature (D-sub) 278. The interface 270 may be included, for example, in the communication interface 170 illustrated in FIG. 1. Additionally or alternatively, the interface 270 may include, for example, a mobile high-definition link (MHL) interface, an SD card/MMC interface, or an infrared data association (IrDA) standard interface.

The audio module 280, for example, may convert a sound into an electrical signal, and vice versa. At least some elements of the audio module 280 may be included, for example, in the input/output interface 150 illustrated in FIG. 1. The audio module 280 may process sound information that is input or output through, for example, a speaker 282, a receiver 284, earphones 286, the microphone 288, etc. The camera module 291 is a device that can photograph a still image and a moving image. According to an embodiment of the present disclosure, the camera module 291 may include one or more image sensors (e.g., a front sensor or a rear sensor), a lens, an image signal processor (ISP), or a flash (e.g., an LED or xenon lamp). The power management module 295 may manage, for example, the power of the electronic device 201. According to an embodiment of the present disclosure, the power management module 295 may include a power management integrated circuit (PMIC), a charger IC, or a battery or fuel gauge. The PMIC may have a wired and/or wireless charging scheme. Examples of the wireless charging scheme may include a magnetic resonance method, a magnetic induction method, an electromagnetic wave method, etc. Additional circuits (e.g., a coil loop, a resonance circuit, a rectifier, etc.) for wireless charging may be further included. The battery gauge may measure, for example, the residual quantity of the battery 296 and a voltage, current, or temperature while charging. The battery 296 may include, for example, a rechargeable battery and/or a solar battery.

The indicator 297 may display a particular state (e.g., a booting state, a message state, a charging state, etc.) of the electronic device 201 or a part thereof (e.g., the processor 210). The motor 298 may convert an electrical signal into a mechanical vibration and may generate a vibration, a haptic effect, etc. The electronic device 201 may include a mobile TV support device that can process media data according to a standard, such as digital multimedia broadcasting (DMB), digital video broadcasting (DVB), mediaFlo™, etc. Each of the above-described component elements of hardware according to the present disclosure may be configured with one or more components, and the names of the corresponding component elements may vary based on the type of electronic device. In various embodiments of the present disclosure, an electronic device (e.g., the electronic device 201) may omit some elements or may further include additional elements, or some of the elements of the electronic device may be combined with each other to configure one entity, in which case the electronic device may identically perform the functions of the corresponding elements prior to the combination.

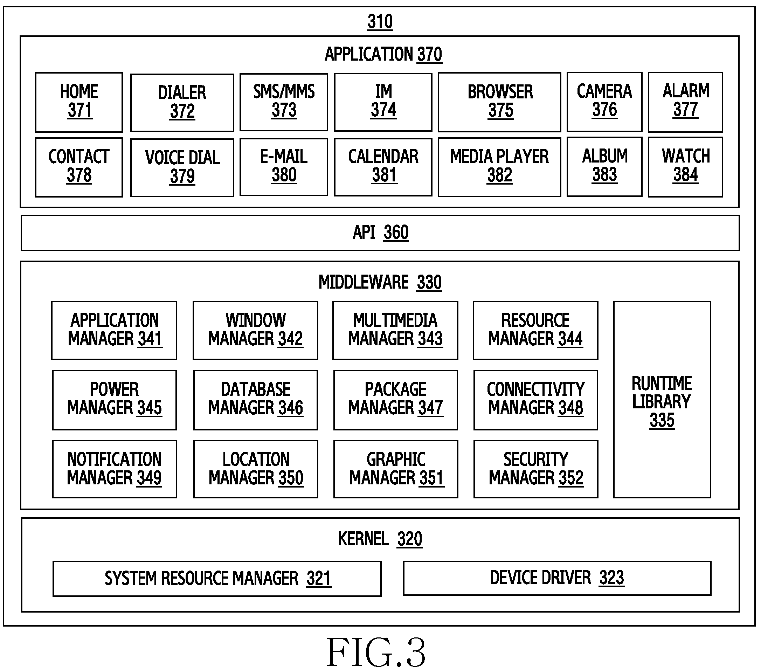

FIG. 3 is a block diagram of a program module according to various embodiments of the present disclosure.

Referring to FIG. 3, the program module 310 (e.g., the program 140) may include an OS that controls resources relating to an electronic device (e.g., the electronic device 101) and/or various applications (e.g., the application programs 147) that are driven on the OS. The OS may include, for example, Android™, iOS™, Windows™, Symbian™, Tizen™, or Bada™.

Referring to FIG. 3, the program module 310 may include a kernel 320 (e.g., the kernel 141), middleware 330 (e.g., the middleware 143), an API 360 (e.g., the API 145), and/or applications 370 (e.g., the application programs 147). At least a part of the program module 310 may be preloaded on the electronic device, or may be downloaded from an external electronic device (e.g., the external electronic device 102 or 104 or the server 106).

The kernel 320 may include, for example, a system resource manager 321 and/or a device driver 323. The system resource manager 321 may control, allocate, or retrieve system resources. According to an embodiment of the present disclosure, the system resource manager 321 may include a process manager, a memory manager, or a file system manager. The device driver 323 may include, for example, a display driver, a camera driver, a Bluetooth driver, a shared memory driver, a USB driver, a keypad driver, a WiFi driver, an audio driver, or an inter-process communication (IPC) driver. For example, the middleware 330 may provide a function used by the applications 370 in common, or may provide various functions to the applications 370 through the API 360 to enable the applications 370 to use the limited system resources within the electronic device. According to an embodiment of the present disclosure, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module used by a compiler in order to add a new function through a programming language while the applications 370 are being executed. The runtime library 335 may manage an input/output, manage a memory, or process an arithmetic function. The application manager 341 may manage, for example, the life cycles of the applications 370. The window manager 342 may manage GUI resources used for a screen. The multimedia manager 343 may identify formats used for reproducing various media files and may encode or decode a media file using a codec suitable for the corresponding format. The resource manager 344 may manage the source codes of the applications 370 or the space of a memory. The power manager 345 may manage, for example, the capacity or power of a battery and may provide power information used for operating the electronic device.

According to an embodiment of the present disclosure, the power manager 345 may operate in conjunction with a basic input/output system (BIOS). The database manager 346 may, for example, generate, search, or change databases to be used by the applications 370. The package manager 347 may manage the installation or update of an application that is distributed in the form of a package file.

The connectivity manager 348 may manage, for example, wireless connection. The notification manager 349 may provide an event (e.g., an arrival message, an appointment, a proximity notification, etc.) to a user. The location manager 350 may manage, for example, the location information of the electronic device. The graphic manager 351 may manage, for example, a graphic effect to be provided to a user, or a user interface relating thereto. The security manage 352 may provide, for example, system security or user authentication.

According to an embodiment of the present disclosure, the middleware 330 may include a telephony manager for managing a voice or video call function of the electronic device or a middleware module that is capable of forming a combination of the functions of the above-described elements.

According to an embodiment of the present disclosure, the middleware 330 may provide specialized modules according to the types of operation systems. The middleware 330 may dynamically remove some of the existing elements, or may add new elements. The API 360 is, for example, a set of API programming functions, and may be provided with different configurations according to OSs. For example, in the case of Android or iOS, each platform may be provided with one API set, and in the case of Tizen, each platform may be provided with two or more API sets.

The applications 370 may include, for example, one or more applications that can perform functions, such as home 371, dialer 372, short message service (SMS)/ multimedia message service (MMS) 373, instant message (IM) 374, browser 375, camera 376, alarm 377, contacts 378, voice dial 379, e-mail 380, calendar 381, media player 382, album 383, watch 384, health care (e.g., measuring exercise quantity or blood glucose), providing of environment information (e.g., atmospheric pressure, humidity, or temperature information), and the like. According to an embodiment of the present disclosure, the applications 370 may include an information exchange application that can support the exchange of information between the electronic device and an external electronic device. The information exchange application may include, for example, a notification relay application for relaying particular information to an external electronic device or a device management application for managing an external electronic device. For example, the notification relay application may relay notification information generated in the other applications of the electronic device to an external electronic device, or may receive notification information from an external electronic device to provide the received notification information to a user. The device management application may install, delete, or update functions of an external electronic device that communicates with the electronic device (e.g., turning on/off the external electronic device itself (or some elements thereof) or adjusting the brightness (or resolution) of a display) or applications executed in the external electronic device.

According to an embodiment of the present disclosure, the applications 370 may include applications (e.g., a health care application of a mobile medical appliance) that are designated according to the attributes of an external electronic device. According to an embodiment of the present disclosure, the applications 370 may include applications received from an external electronic device. At least some of the program module 310 may be implemented in software, firmware, hardware (e.g., the processor 210), or a combination of two or more thereof. At least some of the program module 310 may include, for example, a module, a program, a routine, a set of instructions, and/or a process for performing one or more functions.

The term "module" as used herein includes a unit that includes hardware, software, or firmware and may be used interchangeably with the term, for example, "logic", "logical block, or "circuit. The "module" may be an integrated part, or a minimum unit for performing one or more functions or a part thereof. The "module" may be mechanically or electronically implemented and may include, for example, an application-specific integrated circuit (ASIC) chip, a field-programmable gate arrays (FPGA), or a programmable-logic device, which has been known or are to be developed in the future, for performing certain operations. At least some of devices (e.g., modules or functions thereof) or methods (e.g., operations) according to various embodiments may be implemented by an instruction which is stored a computer-readable storage medium (e.g., the memory 130) in the form of a program module. The instruction, when executed by a processor (e.g., the processor 120), may cause the one or more processors to execute the function corresponding to the instruction. The computer-readable storage medium may include a hard disk, a floppy disk, a magnetic medium (e.g., a magnetic tape), an Optical Media (e.g., compact disc ROM (CD-ROM), digital versatile disc (DVD)), a Magneto-Optical Media (e.g., a floptical disk), an inner memory, etc. The instruction may include a code which is made by a compiler or a code which may be executed by an interpreter. The programming module according to the present disclosure may include one or more of the aforementioned components or may further include other additional components, or some of the aforementioned components may be omitted. Operations performed by a module, a programming module, or other elements according to various embodiments may be executed sequentially, in parallel, repeatedly, or in a heuristic manner. At least some operations may be executed according to another sequence, may be omitted, or may further include other operations.

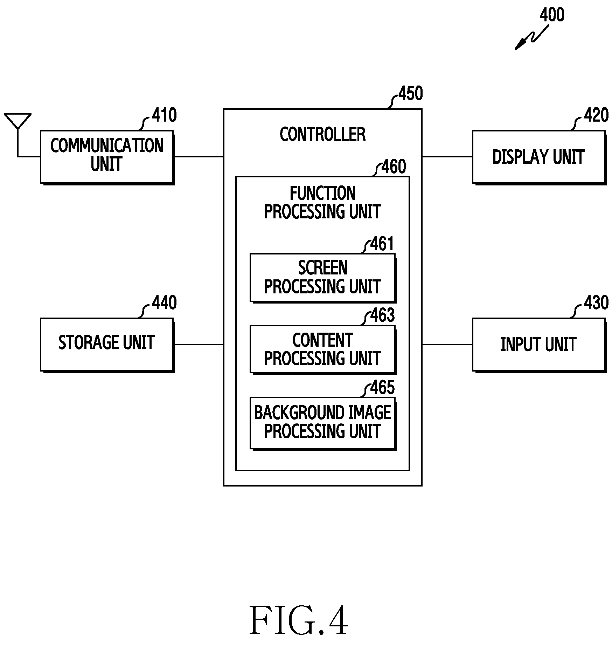

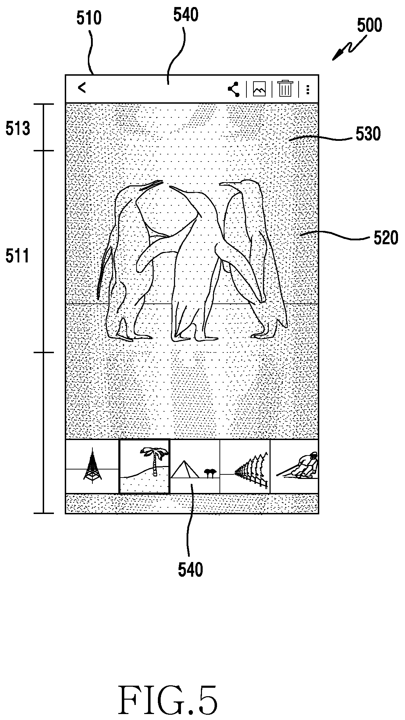

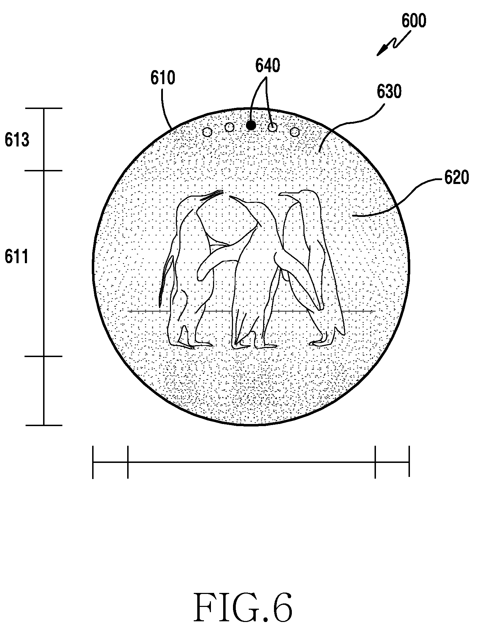

FIG. 4 is a block diagram of an electronic device 400 according to various embodiments of the present disclosure. FIGS. 5 and 6 illustrate screens 500 and 600 according to various embodiments of the present disclosure.

Referring to FIG. 4, the electronic device 400 may include a communication unit 410, a display unit 420, an input unit 430, a storage unit 440, and a controller 450.

The communication unit 410, according to various embodiments of the present disclosure, may perform communication in the electronic device 400. The communication unit 410 may communicate with an external device (not illustrated) through various communication schemes. The communication unit 410 may perform at least one of wireless communication and wired communication. For example, the external device may include an electronic device, a base station, a server, and a satellite. To this end, the communication unit 410 may access at least one of a mobile communication network, a data communication network, and a short range communication network. For example, the communication scheme may include long term evolution (LTE), wideband code division multiple access (WCDMA), GSM, WiFi, Bluetooth, and NFC.

The display unit 420, according to various embodiments of the present disclosure, may output the screens 500 and 600 in the electronic device 400. The screens 500 and 600 may include function execution screens. For example, the display unit 420 may include a LCD, a LED display, an OLED display, a MEMS display, and an electronic paper display. The display unit 420 may be implemented in various shapes. For example, the display unit 420 may be implemented in a rectangular or circular shape.

The input unit 430, according to various embodiments of the present disclosure, may generate an input signal in the electronic device 400. The input unit 430 may generate an input signal in response to a user input of the electronic device 400. For example, the input unit 430 may include a key pad, a dome switch, a physical button, a touch panel, a jog & shuttle, and a sensor. The input unit 430, together with the display unit 420, may be implemented as a touch screen. For example, the input unit 430 may be implemented in the same shape as that of the display unit 420.

The storage unit 440, according to various embodiments of the present disclosure, may store operating programs of the electronic device 400. The storage unit 440 may store programs for executing various functions. The storage unit 440 may store a program for displaying screens according to executed functions. The functions may be applications, and may include a plurality of drive engines. For example, the functions may include an image management function, a health care function, a message reception function, a call reception function, etc. The storage unit 440 may store data that is generated while programs are being executed. The storage unit 440 may store content (520 of FIG. 5 and 620 of FIG. 6). For example, the content 520 and 620 may be images, videos, audio, etc. The storage unit 440 may store background images (530 of FIG. 5 and 630 of FIG. 6) such that the background images correspond to the content 520 and 620.

The controller 450, according to various embodiments of the present disclosure, may control an overall operation in the electronic device 400. The controller 450 may include one or more function processing units 460. The function processing units 460 may perform their functions, respectively. The function processing units 460 may generate the screens (500 of FIG. 5 and 600 of FIG. 6) such that the screens correspond to their functions. To this end, the functions processing units 460 may determine the content 520 and 620 and the background images 530 and 630 of the content 520 and 620. Further, the controller 450 may display the screens 500 and 600. The controller 450 may display the content 520 and 620 and the background images 530 and 630 on the screens 500 and 600. Each function processing unit 460 may include a screen processing unit 461, a content processing unit 463, and a background image processing unit 465.

The screen processing unit 461, according to various embodiments of the present disclosure, may generate and display the screens 500 and 600. The screen processing unit 461 may generate the screens 500 and 600 such that the screens correspond to the shape of the display unit 420. The screen processing unit 461 may configure the screens 500 and 600 with the content 520 and 620 and the background images 530 and 630. In this way, the screen processing unit 461 may display the screens 500 and 600. The screen processing unit 461 may display the content 520 and 620 and the background images 530 and 630 on the screens 500 and 600. The screen processing unit 461 may additionally display, on the screens 500 and 600, display data 540 and 640.

For example, the screen 500 may have a rectangular shape, as illustrated in FIG. 5. To this end, the screen processing unit 461 may generate a rectangular view 510. The view 510 may include a content area 511 and one or more background areas 513. The background areas 513 may abut the content area 511. The background areas 513 may be disposed on one or more of the upper, lower, left, and right sides of the content area 511, or may be disposed to surround the content area 511. The screen processing unit 461 may display the content 520 in the content area 511 and the background image 530 in the background areas 513. The screen processing unit 461 may additionally display the display data 540 in the background areas 513. The screen processing unit 461 may display the display data 540 together with the background image 530. The display data 540 may include at least one of an item, an icon, an indicator, or text.

The screen 600, according to various embodiments of the present disclosure, may have a circular shape, as illustrated in FIG. 6. To this end, the screen processing unit 461 may generate a circular view 610. The view 610 may include a content area 611 and one or more background areas 613. The background areas 613 may abut the content area 611. The background areas 613 may be disposed on one or more of the upper, lower, left, and right sides of the content area 611, or may be disposed to surround the content area 611. The screen processing unit 461 may display the content 620 in the content area 611 and the background image 630 in the background areas 613. The screen processing unit 461 may additionally display the display data 640 in the background areas 613. The screen processing unit 461 may display the display data 640 together with the background image 630. The display data 640 may include at least one of an item, an icon, an indicator, or text.

The content processing unit 463, according to various embodiments of the present disclosure, may process the content 520 and 620. The content processing unit 463 may process the content 520 and 620 such that the content corresponds to the content areas 511 and 611. The content processing unit 463 may decode the content 520 and 620 such that the content 520 and 620 have a specific capacity and resolution.

The background image processing unit 465, according to various embodiments of the present disclosure, may process the background images 530 and 630 of the content 520 and 620. The background image processing unit 465 may process the background images 530 and 630 such that the background images correspond to the background areas 513 and 613. The background image processing unit 465 may generate the background images 530 and 630 from the content 520 and 620. For example, the background image processing unit 465 may include a reversing unit and a blur applying unit. The reversing unit may reverse at least one area of the content 520 and 620. The blur applying unit may apply a blurring effect to at least one area of the content 520 and 620. The background image processing unit 465 may determine the sizes of the background images 530 and 630 such that the sizes of the background images correspond to the sizes of the background areas 513 and 613.

The electronic device 400, according to various embodiments of the present disclosure, may generate the background images 530 and 630 from the content 520 and 620. The electronic device 400, according to the various embodiments of the present disclosure, may apply a blurring effect to at least one area of the content 520 and 620 to generate the background images 530 and 630, thereby distinguishing the content 520 and 620 and the background images 530 and 630 from each other. The electronic device 400, according to the various embodiments of the present disclosure, may reverse at least one area of the content 520 and 620 to generate the background images 530 and 630 so that the electronic device can determine the colors and contrast of the background images 530 and 630 using the colors and contrast of the content 520 and 620. In this way, the electronic device 400, according to the various embodiments of the present disclosure, can reduce a sense of difference between the content 520 and 620 and the background images 530 and 630 on the screens 500 and 600. The electronic device 400, according to the various embodiments of the present disclosure, can prevent the borders between the content 520 and 620 and the background images 530 and 630 from being clearly visible on the screens 500 and 600.

An electronic device, according to various embodiments of the present disclosure, may include: a display; a processor electrically connected to the display; and a memory electrically connected to the processor, wherein the memory may store instructions that configure the processor, when being executed, to: generate a second image that has a mirror image for a part of a first image stored in the memory and is subjected to blurring; display the first image on a part of the screen of the display; and display the second image on a part of the screen of the display such that the second image abuts at least a part of an edge of the displayed first image.

According to various embodiments of the present disclosure, the part of the first image may abut, or may be adjacent to, the part of the edge of the first image.

According to various embodiments of the present disclosure, the mirror image may be symmetric to the part of the first image horizontally, vertically, or diagonally, or with respect to a curve.

According to various embodiments of the present disclosure, the instructions may configure the processor to: display the part of the first image on the substantially central portion of the screen; and display the second image on the screen such that the second image abuts, or is adjacent to, the first image.

According to various embodiments of the present disclosure, the instructions may configure the processor to: form a mirror image for the part of the first image; and generate the second image by blurring the mirror image.

According to various embodiments of the present disclosure, the instructions may configure the processor to: blur the part of the first image; and generate the second image by forming a mirror image for the blurred part.

According to various embodiments of the present disclosure, the instructions may configure the processor to: enlarge at least a part of the second image; and display the enlarged part of the second image on a part of the screen of the display such that the enlarged part of the second image abuts at least a part of the edge of the displayed first image.

According to various embodiments of the present disclosure, the displayed first image may have a quadrilateral, rectangular, polygonal, circular, or elliptical shape.

According to various embodiments of the present disclosure, the instructions may configure the processor to perform at least one of enlarging at least one area of content, reducing the at least one area of the content, and cutting away the at least one area of the content.

According to various embodiments of the present disclosure, the instructions may configure the processor to: determine display data to be displayed in a background area such that the display data corresponds to content; and determine at least one of the color and brightness of the display data on the basis of a background image.

According to various embodiments of the present disclosure, the instructions may configure the processor to determine content according to an executed function.

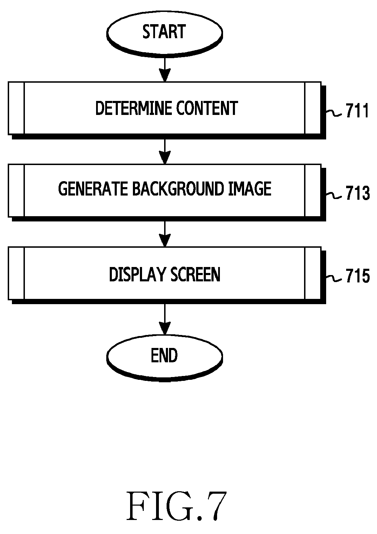

FIG. 7 is a flowchart illustrating a method of displaying a screen, according to various embodiments of the present disclosure.

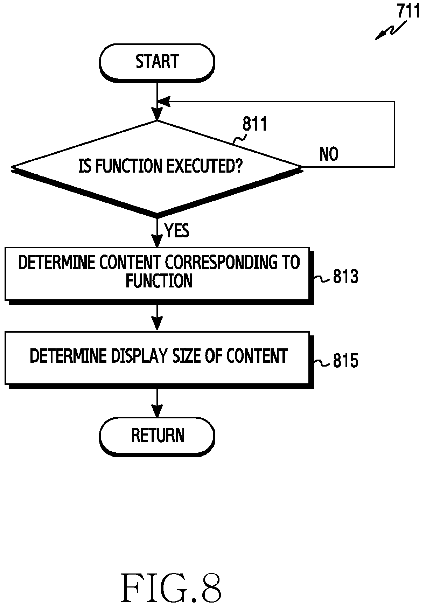

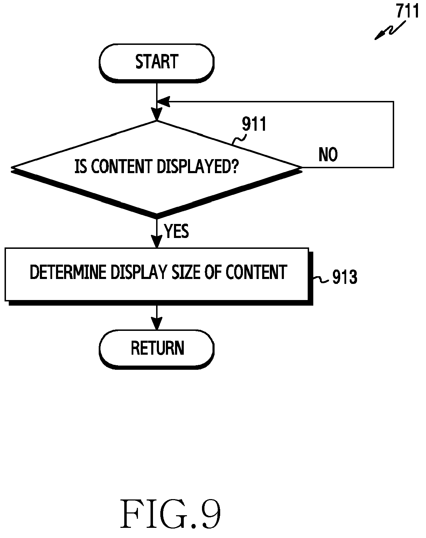

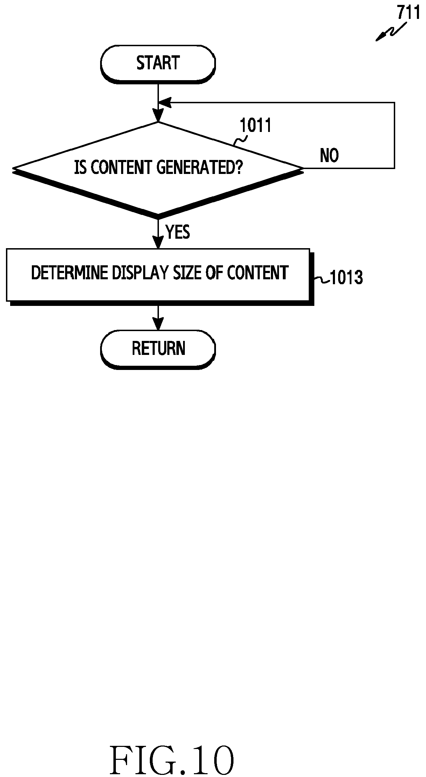

Referring to FIG. 7, the controller 450, according to the various embodiments of the present disclosure, may determine content in operation 711. For example, the controller 450 may determine content according to an executed function, as illustrated in FIG. 8. Alternatively, the controller 450 may determine content in response to a request for displaying content, as illustrated in FIG. 9. In another case, the controller 450 may determine content to be generated, as illustrated in FIG. 10. The content processing unit 463 in the controller 450 may process the content. The content processing unit 463 may process the content such that the content corresponds to a content area. The content processing unit 463 may decode the content such that the content has a specific capacity and resolution.

FIGS. 8 to 10 are flowcharts illustrating examples of the content determining operation of FIG. 7, according to various embodiments of the present disclosure.

Referring to FIG. 8, when a function is executed, the controller 450 may detect the function in operation 811. For example, when the function is selected, the controller 450 may call the function processing unit 460 in response to the function. In this way, the function processing unit 460 may execute the function. In operation 813, the controller 450 may determine content such that the content corresponds to the function. For example, in a case where the function is an image management function, the controller 450 may determine at least one image in the storage unit 440. Alternatively, in a case where the function is a video reproduction function, the controller 450 may determine at least one video in the storage unit 440. The controller 450 may determine the display size of the content in operation 815. The controller 450 may determine the display size of the content such that the display size of the content corresponds to the size of a content area. For example, the controller 450 may determine the aspect ratio of the content on the basis of the aspect ratio of the content area. To this end, the controller 450 may increase or decrease the display size of the content. The controller 450 may return to FIG. 7.

Referring to FIG. 9, when a request for displaying content is received, according to various embodiments of the present disclosure, the controller 450 may detect the request in operation 911. The controller 450 may receive the request for displaying the content from the communication unit 410 or the input unit 430. For example, when an item corresponding to the content is selected, the controller 450 may detect the request for displaying the content. In this way, the controller 450 may determine the content. The controller 450 may determine the display size of the content in operation 913. The controller 450 may determine the display size of the content such that the display size of the content corresponds to the size of a content area. For example, the controller 450 may determine the aspect ratio of the content on the basis of the aspect ratio of the content area. To this end, the controller 450 may increase or decrease the display size of the content. The controller 450 may return to FIG. 7.

Referring to FIG. 10, when content, according to various embodiments of the present disclosure, is generated, the controller 450 may detect the content in operation 1011. For example, the controller 450 may receive the content from an external device through the communication unit 410. Alternatively, the controller 450 may receive an input signal through the input unit 430 to generate the content. In another case, if the electronic device 400 includes a camera unit (not illustrated), the controller 450 may receive an image signal through the camera unit to generate the content. In this way, the controller 450 may determine the content. The controller 450 may determine the display size of the content in operation 1013. The controller 450 may determine the display size of the content such that the display size of the content corresponds to the size of a content area. For example, the controller 450 may determine the aspect ratio of the content on the basis of the aspect ratio of the content area. To this end, the controller 450 may increase or decrease the display size of the content. The controller 450 may return to FIG. 7.

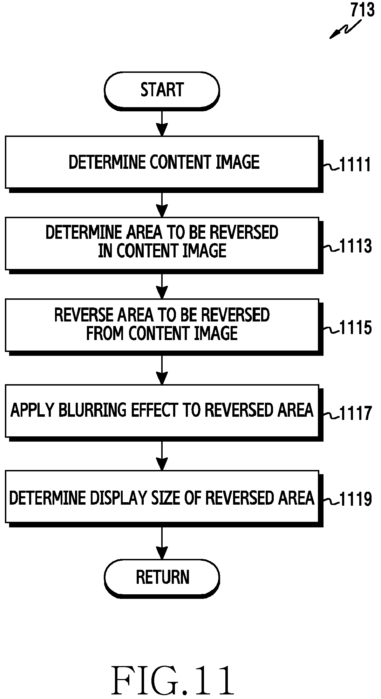

The controller 450 may generate a background image in operation 713. The background image processing unit 465 may process the background image of the content. The background image processing unit 465 may process the background image such that the background image corresponds to a background area. The background image processing unit 465 may generate the background image from the content. To this end, the background image processing unit 465 may reverse at least one area of the content. The background image processing unit 465 may apply a blurring effect to at least one area of the content. For example, the controller 450 may generate the background image as illustrated in FIGS. 11 and 18 to 22 according to various embodiments of the present disclosure.

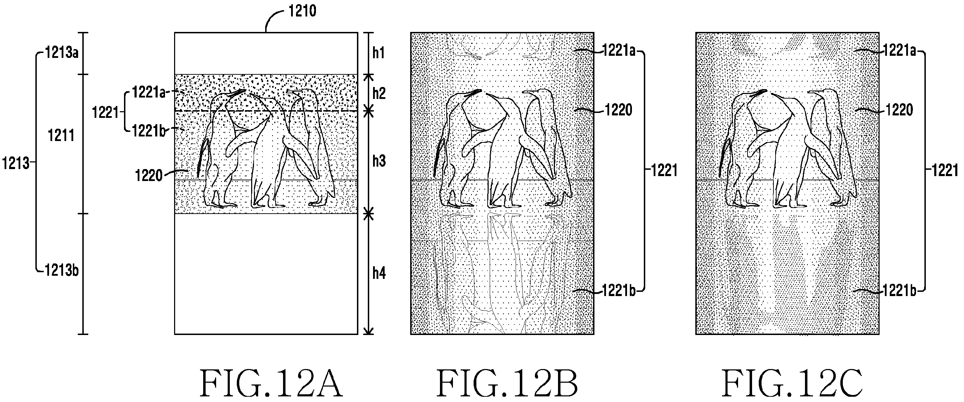

FIG. 11 is a flowchart illustrating the operation of generating the background image in FIG. 7, according to various embodiments of the present disclosure. FIGS. 12A to 17C illustrate examples of the background image generating operation of FIG. 7.

Referring to FIG. 11, the controller 450 may determine a content image 1220, 1320, 1420, 1520, 1620, or 1720 in operation 1111. The controller 450 may determine the content image 1220, 1320, 1420, 1520, 1620, or 1720 from the content. For example, if the content is an image, the controller 450 may determine the image to be the content image 1220, 1320, 1420, 1520, 1620, or 1720. Alternatively, if the content is a video, the controller 450 may determine at least one of the frame images of the video to be the content image 1220, 1320, 1420, 1520, 1620, or 1720. The content image 1220, 1320, 1420, 1520, 1620, or 1720 may have a specific color and contrast.

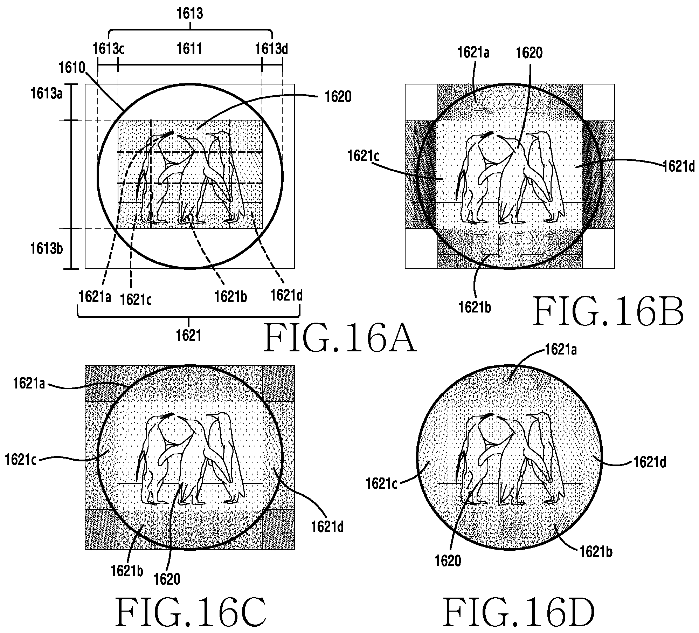

In operation 1113, the controller 450 may determine at least one reversal area 1221, 1321, 1421, 1521, 1621, or 1721 in the content image 1220, 1320, 1420, 1520, 1620, or 1720. The controller 450 may determine at least one area of the content image 1220, 1320, 1420, 1520, 1620, or 1720 to be the reversal area 1221, 1321, 1421, 1521, 1621, or 1721. For example, as illustrated in FIGS. 12A to 15C, the controller 450 may determine the reversal area 1221, 132, 1421, or 1521 such that the reversal area corresponds to a rectangular view 1210, 1310, 1410, or 1510. Alternatively, as illustrated in FIGS. 16A to 17C, the controller 450 may determine the reversal area 1621 or 1721 such that the reversal area corresponds to a circular view 1610 or 1710.

Referring to FIG. 12A, the view 1210 may include a content area 1211 and a background area 1213. The background area 1213 may include an upper background area 1213a and a lower background area 1213b. The upper background area 1213a may be disposed to abut the top of the content area 1211, and the lower background area 1213b may be disposed to abut the bottom of the content area 1211.

The controller 450 may determine the content image 1220 such that the content image 1220 corresponds to the content area 1211. The controller 450 may determine two reversal areas 1221a and 1221b in the content image 1220. The reversal areas 1221a and 1221b may be separated from, or may overlap, each other in the content image 1220. Each of the reversal areas 1221a and 1221b may be determined in a rectangular shape that has the same width as the content image 1220 and a predetermined height. The reversal area 1221 may include the upper reversal area 1221a and the lower reversal area 1221b. The controller 450 may determine the upper area of the content image 1220 to be the upper reversal area 1221a. The controller 450 may determine the lower area of the content image 1220 to be the lower reversal area 1221b.

For example, the height h1 of the upper background area 1213a and the height h4 of the lower background area 1213b may be defined. The controller 450 may determine the upper reversal area 1221a by Equation 1 below. The controller 450 may determine the height h2 of the upper reversal area 1221a to be the ratio of the height h1 of the upper background area 1213a to the sum (h1 + h4) of the height h1 of the upper background area 1213a and the height h4 of the lower background area 1213b. The controller 450 may determine the lower reversal area 1221b by Equation 2 below. The controller 450 may determine the height h3 of the lower reversal area 1221b to be the ratio of the height h4 of the lower background area 1213b to the sum (h1 + h4) of the height h1 of the upper background area 1213a and the height h4 of the lower background area 1213b.

$$h2 = h1/(h1 + h4)$$

$$\dots \text{Equation 1}$$

$$h3 = h4/(h1 + h4)$$

$$\dots \text{Equation 2}$$

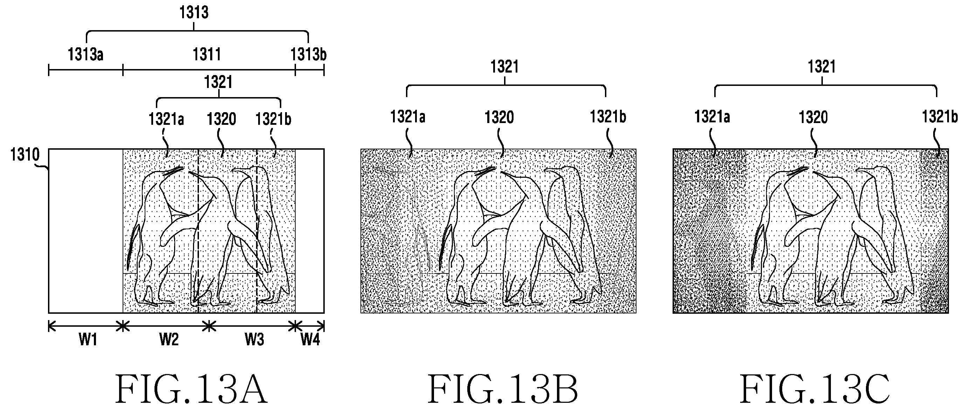

Referring to FIG. 13A, the view 1310 may include a content area 1311 and a background area 1313. The background area 1313 may include a left background area 1313a and a right background area 1313b. The left background area 1313a may be disposed to abut the left side of the content area 1311, and the right background area 1313b may be disposed to abut the right side of the content area 1311.

The controller 450 may determine the content image 1320 such that the content image 1320 corresponds to the content area 1311. The controller 450 may determine two reversal areas 1321a and 1231b in the content image 1320. The reversal areas 1321a and 1321b may be separated from, or may overlap, each other in the content image 1320. Each of the reversal areas 1321a and 1321b may be determined in a rectangular shape that has the same height as the content image 1320 and a predetermined width. The reversal area 1321 may include the left reversal area 1321a and the right reversal area 1321b. The controller 450 may determine the left area of the content image 1320 to be the left reversal area 1321a. The controller 450 may determine the right area of the content image 1320 to be the right reversal area 1321b.

For example, the width w1 of the left background area 1313a and the width w4 of the right background area 1313b may be defined. The controller 450 may determine the left reversal area 1321a by Equation 3 below. The controller 450 may determine the width w2 of the left reversal area 1321a to be the ratio of the width w1 of the left background area 1313a to the sum (w1 + w4) of the width w1 of the left background area 1313a and the width w4 of the right background area 1313b. The controller 450 may determine the right reversal area 1321b by Equation 4 below. The controller 450 may determine the width w3 of the right reversal area 1321b to be the ratio of the width w4 of the right background area 1313b to the sum (w1 + w4) of the width w1 of the left background area 1313a and the width w4 of the right background area 1313b.

$$w2 = w1/(w1 + w4)$$

$$\dots \text{Equation 3}$$

$$w3 = w4/(w1 + w4)$$

$$\dots \text{Equation 4}$$

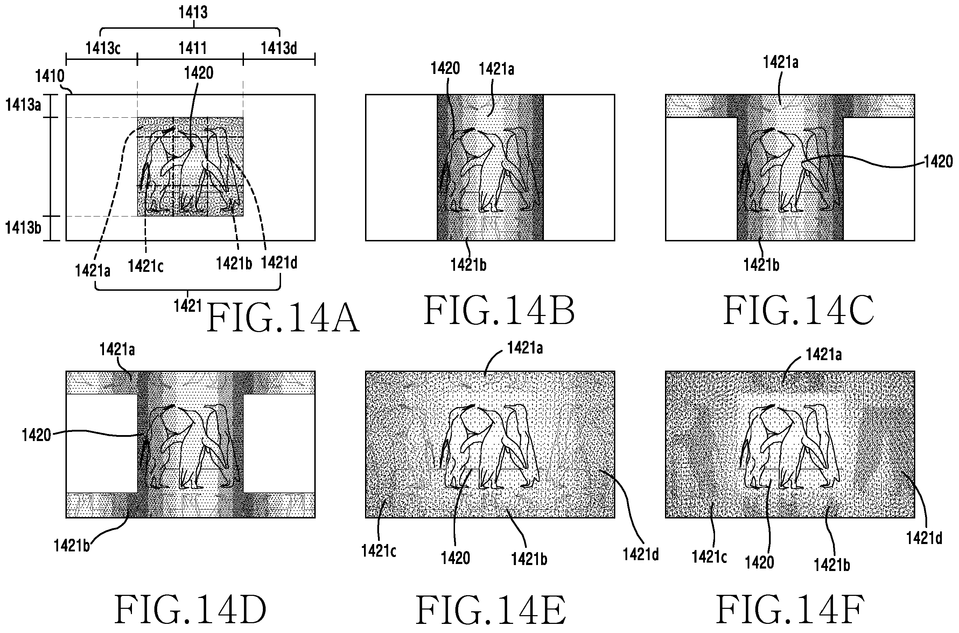

Referring to FIG. 14A, the view 1410 may include a content area 1411 and a background area 1413. The background area 1413 may surround the content area 1411. The background area 1413 may be divided into an upper background area 1413a, a lower background area 1413b, a left background area 1413c, and a right background area 1413d. The upper background area 1413a may be disposed to abut the top of the content area 1411, the lower background area 1413b may be disposed to abut the bottom of the content area 1411, the left background area 1413c may be disposed to abut the left side of the content area 1411, and the right background area 1413d may be disposed to abut the right side of the content area 1411.

The controller 450 may determine the content image 1420 such that the content image 1420 corresponds to the content area 1411. The controller 450 may determine four reversal areas 1421a, 1421b, 1421c, and 1421d in the content image 1420. The reversal areas 1421a, 1421b, 1421c, and 1421d may be separated from, or may overlap, each other in the content image 1420. The reversal area 1421 may include the upper reversal area 1421a, the lower reversal area 1421b, the left reversal area 1421c, and the right reversal area 1421d. The controller 450 may determine the upper area of the content image 1420 to be the upper reversal area 1421a. The controller 450 may determine the lower area of the content image 1420 to be the lower reversal area 1421b. The controller 450 may determine the left area of the content image 1420 to be the left reversal area 1421c. The controller 450 may determine the right area of the content image 1420 to be the right reversal area 1421d. The upper and lower reversal areas 1421a and 1421b may be determined in a rectangular shape that has the same width as the content image 1420 and a predetermined height. The left and right reversal areas 1421c and 1421d may be determined in a rectangular shape that has the same height as the content image 1420 and a predetermined width.

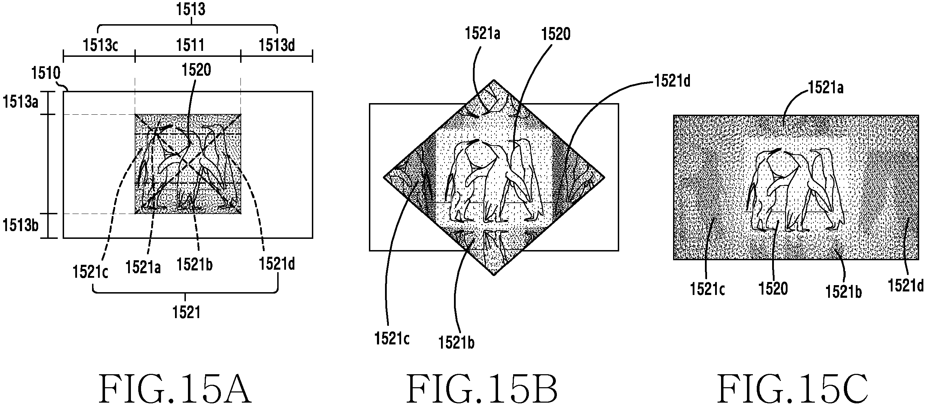

Referring to FIG. 15A, the view 1510 may include a content area 1511 and a background area 1513. The background area 1513 may surround the content area 1511. The background area 1513 may be divided into an upper background area 1513a, a lower background area 1513b, a left background area 1513c, and a right background area 1513d. The upper background area 1513a may be disposed to abut the top of the content area 1511, the lower background area 1513b may be disposed to abut the bottom of the content area 1511, the left background area 1513c may be disposed to abut the left side of the content area 1511, and the right background area 1513d may be disposed to abut the right side of the content area 1511.

The controller 450 may determine the content image 1520 such that the content image 1520 corresponds to the content area 1511. The controller 450 may determine four reversal areas 1521a, 1521b, 1521c, and 1521d in the content image 1520. The reversal areas 1521a, 1521b, 1521c, and 1521d may be separated from, or may overlap, each other in the content image 1520. The controller 450 may determine the reversal areas 1521a, 1521b, 1521c, and 1521d by using dividing lines that extend from the center of the content image 1520 to the four vertexes. In this way, the reversal areas 1521a, 1521b, 1521c, and 1521d may be determined in a triangular shape. The reversal area 1521 may include the upper reversal area 1521a, the lower reversal area 1521b, the left reversal area 1521c, and the right reversal area 1521d. The controller 450 may determine the upper area of the content image 1520 to be the upper reversal area 1521a. The controller 450 may determine the lower area of the content image 1520 to be the lower reversal area 1521b. The controller 450 may determine the left area of the content image 1520 to be the left reversal area 1521c. The controller 450 may determine the right area of the content image 1520 to be the right reversal area 1521d.

Referring to FIG. 16A, the view 1610 may include a content area 1611 and a background area 1613. The background area 1613 may surround the content area 1611. The background area 1613 may be divided into an upper background area 1613a, a lower background area 1613b, a left background area 1613c, and a right background area 1613d. The upper background area 1613a may be disposed to abut the top of the content area 1611, the lower background area 1613b may be disposed to abut the bottom of the content area 1611, the left background area 1613c may be disposed to abut the left side of the content area 1611, and the right background area 1613d may be disposed to abut the right side of the content area 1611.

The controller 450 may determine the content image 1620 such that the content image 1620 corresponds to the content area 1611. The controller 450 may determine four reversal areas 1621a, 1621b, 1621c, and 1621d in the content image 1620. The reversal areas 1621a, 1621b, 1621c, and 1621d may be separated from, or may overlap, each other in the content image 1620. The reversal area 1621 may include the upper reversal area 1621a, the lower reversal area 1621b, the left reversal area 1621c, and the right reversal area 1621d. The controller 450 may determine the upper area of the content image 1620 to be the upper reversal area 1621a. The controller 450 may determine the lower area of the content image 1620 to be the lower reversal area 1621b. The controller 450 may determine the left area of the content image 1620 to be the left reversal area 1621c. The controller 450 may determine the right area of the content image 1620 to be the right reversal area 1621d. The upper and lower reversal areas 1621a and 1621b may be determined in a rectangular shape that has the same width as the content image 1620 and a predetermined height. The left and right reversal areas 1621c and 1621d may be determined in a rectangular shape that has the same height as the content image 1620 and a predetermined width.

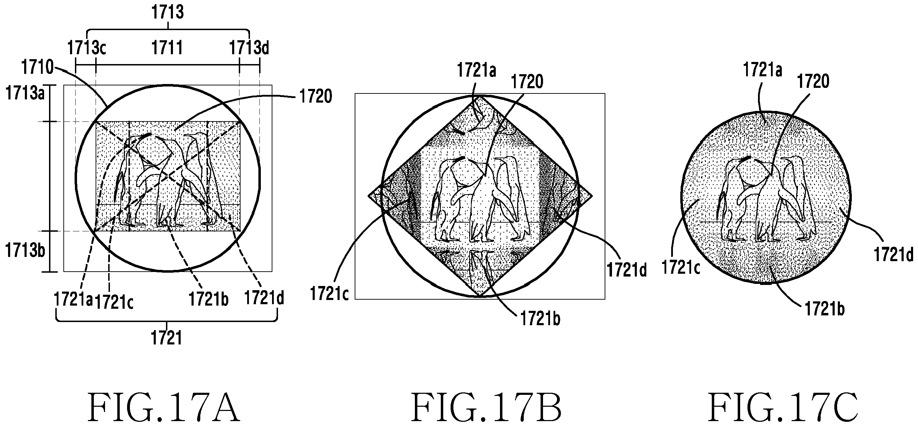

Referring to FIG. 17A, the view 1710 may include a content area 1711 and a background area 1713. The background area 1713 may surround the content area 1711. The background area 1713 may be divided into an upper background area 1713a, a lower background area 1713b, a left background area 1713c, and a right background area 1713d. The upper background area 1713a may be disposed to abut the top of the content area 1711, the lower background area 1713b may be disposed to abut the bottom of the content area 1711, the left background area 1713c may be disposed to abut the left side of the content area 1711, and the right background area 1713d may be disposed to abut the right side of the content area 1711.

The controller 450 may determine the content image 1720 such that the content image 1720 corresponds to the content area 1711. The controller 450 may determine four reversal areas 1721 a, 1721b, 1721c, and 1721d in the content image 1720. The reversal areas 1721a, 1721b, 1721c, and 1721d may be separated from, or may overlap, each other in the content image 1720. The controller 450 may determine the reversal areas 1721 a, 1721b, 1721 c, and 1721d by using dividing lines that extend from the center of the content image 1720 to the four vertexes thereof. In this way, the reversal areas 1721 a, 1721b, 1721 c, and 1721d may be determined in a triangular shape. The reversal area 1721 may include the upper reversal area 1721 a, the lower reversal area 1721b, the left reversal area 1721c, and the right reversal area 1721 d. The controller 450 may determine the upper area of the content image 1720 to be the upper reversal area 1721a. The controller 450 may determine the lower area of the content image 1720 to be the lower reversal area 1721b. The controller 450 may determine the left area of the content image 1720 to be the left reversal area 1721c. The controller 450 may determine the right area of the content image 1720 to be the right reversal area 1721d.

In operation 1115, the controller 450 may reverse the reversal area 1221, 1321, 1421, 1521, 1621, or 1721 from the content image 1220, 1320, 1420, 1520, 1620, or 1720. For example, as illustrated in FIGS. 12A to 15C, the controller 450 may reverse the reversal area 1221, 132, 1421, or 1521 such that the reversal area corresponds to the rectangular view 1210, 1310, 1410, or 1510. Alternatively, as illustrated in FIGS. 16A to 17C, the controller 450 may reverse the reversal area 1621 or 1721 such that the reversal area corresponds to the circular view 1610 or 1710.

Referring to FIG. 12B, the controller 450 may reverse the reversal area 1221 from the content image 1220 to the background area 1213. The controller 450 may reverse the reversal areas 1221a and 1221b in different directions from the content image 1220. The controller 450 may reverse the upper reversal area 1221a upward from the content image 1220. The controller 450 may reverse the upper reversal area 1221a with respect to the upper edge of the content image 1220. The controller 450 may reverse the upper reversal area 1221a toward the upper background area 1213a. The controller 450 may reverse the lower reversal area 1221b downward from the content image 1220. The controller 450 may reverse the lower reversal area 1221b with respect to the lower edge of the content image 1220. The controller 450 may reverse the lower reversal area 1221b toward the lower background area 1213b.

Referring to FIG. 13B, the controller 450 may reverse the reversal area 1321 from the content image 1320 to the background area 1313. The controller 450 may reverse the reversal areas 1321 a and 1321b in different directions from the content image 1320. The controller 450 may reverse the left reversal area 1321a leftward from the content image 1320. The controller 450 may reverse the left reversal area 1321a with respect to the left edge of the content image 1320. The controller 450 may reverse the left reversal area 1321a toward the left background area 1313a. The controller 450 may reverse the right reversal area 1321b rightward from the content image 1320. The controller 450 may reverse the right reversal area 1321b with respect to the right edge of the content image 1320. The controller 450 may reverse the right reversal area 1321b toward the right background area 1313b.

Referring to FIGS. 14B to 14E, the controller 450 may reverse the reversal area 1421 from the content image 1420 to the background area 1413. The controller 450 may reverse the reversal areas 1421a, 1421b, 1421c, and 1421d in different directions from the content image 1420.

Referring to FIG. 14B, the controller 450 may reverse the upper reversal area 1421a upward from the content image 1420. The controller 450 may reverse the upper reversal area 1421a with respect to the upper edge of the content image 1420. The controller 450 may reverse the upper reversal area 1421a toward the upper background area 1413a. The controller 450 may reverse the lower reversal area 1421b downward from the content image 1420. The controller 450 may reverse the lower reversal area 1421b with respect to the lower edge of the content image 1420. The controller 450 may reverse the lower reversal area 1421b toward the lower background area 1413b.

Referring to FIG. 14C, the controller 450 may reverse at least a part of the upper reversal area 1421a from the upper reversal area 1421a. The controller 450 may reverse at least a part of the upper reversal area 1421a leftward and rightward from the upper reversal area 1421a. The controller 450 may reverse at least a part of the upper reversal area 1421a with respect to a virtual line that extends upward from the left edge of the content image 1420. The width of at least a part of the upper reversal area 1421a may be the same as that of the left reversal area 1421c. The controller 450 may reverse at least a part of the upper reversal area 1421a with respect to a virtual line that extends upward from the right edge of the content image 1420. The width of at least a part of the upper reversal area 1321a may be the same as that of the right reversal area 1421d.

Referring to FIG. 14D, the controller 450 may reverse at least a part of the lower reversal area 1421b from the lower reversal area 1421b. The controller 450 may reverse at least a part of the lower reversal area 1421b leftward and rightward from the lower reversal area 1421b. The controller 450 may reverse at least a part of the lower reversal area 1421b with respect to a virtual line that extends upward from the left edge of the content image 1420. The width of at least a part of the lower reversal area 1421b may be the same as that of the left reversal area 1421c. The controller 450 may reverse at least a part of the lower reversal area 1421b with respect to a virtual line that extends upward from the right edge of the content image 1420. The width of at least a part of the lower reversal area 1421b may be the same as that of the right reversal area 1421d.

Referring to FIG. 14E, the controller 450 may reverse the left reversal area 1421c leftward from the content image 1420. The controller 450 may reverse the left reversal area 1421c with respect to the left edge of the content image 1420. The controller 450 may reverse the left reversal area 1421c toward the left background area 1413c. The controller 450 may reverse the right reversal area 1421d rightward from the content image 1420. The controller 450 may reverse the right reversal area 1421d with respect to the right edge of the content image 1420. The controller 450 may reverse the right reversal area 1421d toward the right background area 1413d.

Referring to FIG. 15B, the controller 450 may reverse the reversal area 1521 from the content image 1520 to the background area 1513. The controller 450 may reverse the reversal areas 1521a, 1521b, 1521c, and 1521d in different directions from the content image 1520.

The controller 450 may reverse the upper reversal area 1521a upward from the content image 1520. The controller 450 may reverse the upper reversal area 1521a with respect to the upper edge of the content image 1520. The controller 450 may reverse the upper reversal area 1521a toward the upper background area 1513a. The controller 450 may reverse the lower reversal area 1521b downward from the content image 1520. The controller 450 may reverse the lower reversal area 1521b with respect to the lower edge of the content image 1520. The controller 450 may reverse the lower reversal area 1521b toward the lower background area 1513b.

The controller 450 may reverse the left reversal area 1521c leftward from the content image 1520. The controller 450 may reverse the left reversal area 1521c with respect to the left edge of the content image 1520. The controller 450 may reverse the left reversal area 1521c toward the left background area 1513c. The controller 450 may reverse the right reversal area 1521d rightward from the content image 1520. The controller 450 may reverse the right reversal area 1521d with respect to the right edge of the content image 1520. The controller 450 may reverse the right reversal area 1521d toward the right background area 1513d.

Referring to FIG. 16B, the controller 450 may reverse the reversal area 1621 from the content image 1620 to the background area 1613. The controller 450 may reverse the reversal areas 1621 a, 1621b, 1621c, and 1621d in different directions from the content image 1620.

The controller 450 may reverse the upper reversal area 1621a upward from the content image 1620. The controller 450 may reverse the upper reversal area 1621a with respect to the upper edge of the content image 1620. The controller 450 may reverse the upper reversal area 1621a toward the upper background area 1613a. The controller 450 may reverse the lower reversal area 1621b downward from the content image 1620. The controller 450 may reverse the lower reversal area 1621b with respect to the lower edge of the content image 1620. The controller 450 may reverse the lower reversal area 1621b toward the lower background area 1613b.

The controller 450 may reverse the left reversal area 1621c leftward from the content image 1620. The controller 450 may reverse the left reversal area 1621c with respect to the left edge of the content image 1620. The controller 450 may reverse the left reversal area 1621c toward the left background area 1613c. The controller 450 may reverse the right reversal area 1621d rightward from the content image 1620. The controller 450 may reverse the right reversal area 1621d with respect to the right edge of the content image 1620. The controller 450 may reverse the right reversal area 1621d toward the right background area 1613d.

Referring to FIG. 17B, the controller 450 may reverse the reversal area 1721 from the content image 1720 to the background area 1713. The controller 450 may reverse the reversal areas 1721 a, 1721b, 1721c, and 1721d in different directions from the content image 1720.

The controller 450 may reverse the upper reversal area 1721a upward from the content image 1720. The controller 450 may reverse the upper reversal area 1721a with respect to the upper edge of the content image 1720. The controller 450 may reverse the upper reversal area 1721a toward the upper background area 1713a. The controller 450 may reverse the lower reversal area 1721b downward from the content image 1720. The controller 450 may reverse the lower reversal area 1721b with respect to the lower edge of the content image 1720. The controller 450 may reverse the lower reversal area 1721b toward the lower background area 1713b.

The controller 450 may reverse the left reversal area 1721c leftward from the content image 1720. The controller 450 may reverse the left reversal area 1721c with respect to the left edge of the content image 1720. The controller 450 may reverse the left reversal area 1721c toward the left background area 1713c. The controller 450 may reverse the right reversal area 1721d rightward from the content image 1720. The controller 450 may reverse the right reversal area 1721d with respect to the right edge of the content image 1720. The controller 450 may reverse the right reversal area 1721d toward the right background area 1713d.

In operation 1117, the controller 450 may apply a dimming effect to the reversal area 1221, 1321, 1421, 1521, 1621, or 1721. The controller 450 may apply a blurring effect to the reversal area 1221, 1321, 1421, 1521, 1621, or 1721. Alternatively, the controller 450 may apply various post-processing effects, in addition to the blurring effect, to the reversal area 1221, 1321, 1421, 1521, 1621, or 1721. The controller 450 may apply a dimming effect to the reversal area 1221, 1321, 1421, 1521, 1621, or 1721 as illustrated in FIGS. 12A to 17C. The reversal area 1221, 1321, 1421, 1521, 1621, or 1721 may include an object. The object may be distinguished from the surrounding portion, similarly to a portrait or text. At least one of the color and contrast of the object may be distinguished from at least one of the color and contrast of the surrounding portion. In this case, the controller 450 may remove a portion that includes the object from the reversal area 1221, 1321, 1421, 1521, 1621, or 1721 and may replace the corresponding portion with at least a part of the surrounding portion.

In operation 1119, the controller 450 may determine the display size of the reversal area 1221, 1321, 1421, 1521, 1621, or 1721. The controller 450 may adjust the reversal area 1221, 1321, 1421, 1521, 1621, or 1721. The controller 450 may enlarge or reduce the reversal area 1221, 1321, 1421, 1521, 1621, or 1721. Alternatively, the controller 450 may cut away a part of the reversal area 1221, 1321, 1421, 1521, 1621, or 1721. For example, as illustrated in FIGS. 12A to 15C, the controller 450 may determine the display size of the reversal area 1221, 132, 1421, or 1521 such that the reversal area corresponds to the rectangular view 1210, 1310, 1410, or 1510. Further, as illustrated in FIGS. 16A to 17C, the controller 450 may determine the display size of the reversal area 1621 or 1721 such that the reversal area corresponds to the circular view 1610 or 1710. In this way, the controller 450 may determine the reversal area 1221, 1321, 1421, 1521, 1621, or 1721 to be the background image of the content. The controller 450 may return to FIG. 7.

Referring to FIG. 12C, the controller 450 may determine the display size of the reversal area 1221. The controller 450 may determine the display size of the reversal area 1221 such that the reversal area corresponds to the size of the background area 1213. The controller 450 may determine the display size of the upper reversal area 1221a such that the display size of the upper reversal area 1221a corresponds to the size of the upper background area 1213a. The controller 450 may adjust the upper reversal area 1221a. The controller 450 may enlarge or reduce the upper reversal area 1221a. Alternatively, the controller 450 may cut away the upper end portion of the upper reversal area 1221a. The controller 450 may determine the display size of the lower reversal area 1221b such that the display size of the lower reversal area 1221b corresponds to the size of the lower background area 1213b. The controller 450 may adjust the lower reversal area 1221b. The controller 450 may enlarge or reduce the lower reversal area 1221b. Alternatively, the controller 450 may cut away the lower end portion of the lower reversal area 1221b.

Referring to FIG. 13C, the controller 450 may determine the display size of the reversal area 1321. The controller 450 may determine the display size of the reversal area 1321 such that the reversal area corresponds to the size of the background area 1313. The controller 450 may determine the display size of the left reversal area 1321a such that the display size of the left reversal area 1321a corresponds to the size of the left background area 1313a. The controller 450 may adjust the left reversal area 1321a. The controller 450 may enlarge or reduce the left reversal area 1321a. Alternatively, the controller 450 may cut away the left end portion of the left reversal area 1321a. The controller 450 may determine the display size of the right reversal area 1321b such that the display size of the right reversal area 1321b corresponds to the size of the right background area 1313b. The controller 450 may adjust the right reversal area 1321b. The controller 450 may enlarge or reduce the right reversal area 1321b. Alternatively, the controller 450 may cut away the right end portion of the right reversal area 1321b.

Referring to FIG. 14F, the controller 450 may determine the display size of the reversal area 1421. The controller 450 may determine the display size of the reversal area 1421 such that the reversal area corresponds to the size of the background area 1413.

The controller 450 may determine the display size of the upper reversal area 1421 a such that the display size of the upper reversal area 1421 a corresponds to the size of the upper background area 1413a. The controller 450 may adjust the upper reversal area 1421a. The controller 450 may enlarge or reduce the upper reversal area 1421a. Alternatively, the controller 450 may cut away the upper end portion of the upper reversal area 1421a. The controller 450 may determine the display size of the lower reversal area 1421b such that the display size of the lower reversal area 1421b corresponds to the size of the lower background area 1413b. The controller 450 may adjust the lower reversal area 1421b. The controller 450 may enlarge or reduce the lower reversal area 1421b. Alternatively, the controller 450 may cut away the lower end portion of the lower reversal area 1421b.

The controller 450 may determine the display size of the left reversal area 1421c such that the display size of the left reversal area 1421c corresponds to the size of the left background area 1413c. The controller 450 may adjust the left reversal area 1421c. The controller 450 may enlarge or reduce the left reversal area 1421c. Alternatively, the controller 450 may cut away the left end portion of the left reversal area 1421c. The controller 450 may determine the display size of the right reversal area 1421d such that the display size of the right reversal area 1421d corresponds to the size of the right background area 1413d. The controller 450 may adjust the right reversal area 1421d. The controller 450 may enlarge or reduce the right reversal area 1421d. Alternatively, the controller 450 may cut away the right end portion of the right reversal area 1421d.

Referring to FIG. 15C, the controller 450 may determine the display size of the reversal area 1521. The controller 450 may determine the display size of the reversal area 1521 such that the reversal area corresponds to the size of the background area 1513.

The controller 450 may determine the display size of the upper reversal area 1521a such that the display size of the upper reversal area 1521a corresponds to the size of the upper background area 1513a. The controller 450 may adjust the upper reversal area 1521a. The controller 450 may enlarge or reduce the upper reversal area 1521a. Alternatively, the controller 450 may cut away the upper end portion of the upper reversal area 1521a. To this end, the controller 450 may extend the upper vertex of the upper reversal area 1521a to the upper vertexes of the upper background area 1513a. Alternatively, the controller 450 may extend the intersections of the edges of the upper reversal area 1521a and the edge of the upper background area 1513a to the upper vertexes of the upper background area 1513a.

The controller 450 may determine the display size of the lower reversal area 1521b such that the display size of the lower reversal area 1521b corresponds to the size of the lower background area 1513b. The controller 450 may adjust the lower reversal area 1521b. The controller 450 may enlarge or reduce the lower reversal area 1521b. Alternatively, the controller 450 may cut away the lower end portion of the lower reversal area 1521b. To this end, the controller 450 may extend the lower vertex of the lower reversal area 1521b to the lower vertexes of the lower background area 1513b. Alternatively, the controller 450 may extend the intersections of the edges of the lower reversal area 1521b and the edge of the lower background area 1513b to the lower vertexes of the lower background area 1513b.

The controller 450 may determine the display size of the left reversal area 1521c such that the display size of the left reversal area 1521c corresponds to the size of the left background area 1513c. The controller 450 may adjust the left reversal area 1521c. The controller 450 may enlarge or reduce the left reversal area 1521c. Alternatively, the controller 450 may cut away the left end portion of the left reversal area 1521c. To this end, the controller 450 may extend the left vertex of the lower reversal area 1521c to the left vertexes of the left background area 1513c. Alternatively, the controller 450 may extend the intersections of the edges of the left reversal area 1521c and the edge of the left background area 1513c to the left vertexes of the left background area 1513c.

The controller 450 may determine the display size of the right reversal area 1521d such that the display size of the right reversal area 1521d corresponds to the size of the right background area 1513d. The controller 450 may adjust the right reversal area 1521d. The controller 450 may enlarge or reduce the right reversal area 1521d. Alternatively, the controller 450 may cut away the right end portion of the right reversal area 1521d. To this end, the controller 450 may extend the right vertex of the right reversal area 1521d to the right vertexes of the right background area 1513d. Alternatively, the controller 450 may extend the intersections of the edges of the right reversal area 1521d and the edge of the right background area 1513d to the right vertexes of the right background area 1513d.

Referring to FIG. 16D, the controller 450 may determine the display size of the reversal area 1621. The controller 450 may determine the display size of the reversal area 1621 such that the reversal area corresponds to the size of the background area 1613.

The controller 450 may determine the display size of the upper reversal area 1621 a such that the display size of the upper reversal area 1621 a corresponds to the size of the upper background area 1613a. The controller 450 may adjust the upper reversal area 1621a. The controller 450 may enlarge or reduce the upper reversal area 1621a. Alternatively, the controller 450 may cut away the upper end portion of the upper reversal area 1621a. The controller 450 may determine the display size of the lower reversal area 1621b such that the display size of the lower reversal area 1621b corresponds to the size of the lower background area 1613b. The controller 450 may adjust the lower reversal area 1621b. The controller 450 may enlarge or reduce the lower reversal area 1621b. Alternatively, the controller 450 may cut away the lower end portion of the lower reversal area 1621b.

The controller 450 may determine the display size of the left reversal area 1621c such that the display size of the left reversal area 1621c corresponds to the size of the left background area 1613c. The controller 450 may adjust the left reversal area 1621c. The controller 450 may enlarge or reduce the left reversal area 1621c. Alternatively, the controller 450 may cut away the left end portion of the left reversal area 1621c. The controller 450 may determine the display size of the right reversal area 1621d such that the display size of the right reversal area 1621d corresponds to the size of the right background area 1613d. The controller 450 may adjust the right reversal area 1621d. The controller 450 may enlarge or reduce the right reversal area 1621d. Alternatively, the controller 450 may cut away the right end portion of the right reversal area 1621d.

Referring to FIG. 17C, the controller 450 may determine the display size of the reversal area 1721. The controller 450 may determine the display size of the reversal area 1721 such that the reversal area corresponds to the size of the background area 1713.

The controller 450 may determine the display size of the upper reversal area 1721a such that the display size of the upper reversal area 1721a corresponds to the size of the upper background area 1713a. The controller 450 may adjust the upper reversal area 1721a. The controller 450 may enlarge or reduce the upper reversal area 1721a. Alternatively, the controller 450 may cut away the upper end portion of the upper reversal area 1721a. To this end, the controller 450 may extend the upper vertex of the upper reversal area 1721a to the intersections of the dividing lines that extend from the center of the content image 1720 and the edge of the upper background area 1713a in the upper background area 1713a. Alternatively, the controller 450 may extend the intersections of the edges of the upper reversal area 1721a and the edge of the upper background area 1713a to the intersections of the dividing lines that extend from the center of the content image 1720 and the edge of the upper background area 1713a in the upper background area 1713a.

The controller 450 may determine the display size of the lower reversal area 1721b such that the display size of the lower reversal area 1721b corresponds to the size of the lower background area 1713b. The controller 450 may adjust the lower reversal area 1721b. The controller 450 may enlarge or reduce the lower reversal area 1721b. Alternatively, the controller 450 may cut away the lower end portion of the lower reversal area 1721b. To this end, the controller 450 may extend the lower vertex of the lower reversal area 1721b to the intersections of the dividing lines that extend from the center of the content image 1720 and the edge of the lower background area 1713b in the lower background area 1713b. Alternatively, the controller 450 may extend the intersections of the edges of the lower reversal area 1721b and the edge of the lower background area 1713b to the intersections of the dividing lines that extend from the center of the content image 1720 and the edge of the lower background area 1713b in the lower background area 1713b.

The controller 450 may determine the display size of the left reversal area 1721c such that the display size of the left reversal area 1721c corresponds to the size of the left background area 1713c. The controller 450 may adjust the left reversal area 1721c. The controller 450 may enlarge or reduce the left reversal area 1721c. Alternatively, the controller 450 may cut away the left end portion of the left reversal area 1721c. To this end, the controller 450 may extend the left vertex of the left reversal area 1721c to the intersections of the dividing lines that extend from the center of the content image 1720 and the edge of the left background area 1713c in the left background area 1713c. Alternatively, the controller 450 may extend the intersections of the edges of the left reversal area 1721c and the edge of the left background area 1713c to the intersections of the dividing lines that extend from the center of the content image 1720 and the edge of the left background area 1713c in the left background area 1713c.

The controller 450 may determine the display size of the right reversal area 1721d such that the display size of the right reversal area 1721d corresponds to the size of the right background area 1713d. The controller 450 may adjust the right reversal area 1721d. The controller 450 may enlarge or reduce the right reversal area 1721d. Alternatively, the controller 450 may cut away the right end portion of the right reversal area 1721d. To this end, the controller 450 may extend the right vertex of the right reversal area 1721d to the intersections of the dividing lines that extend from the center of the content image 1720 and the edge of the right background area 1713d in the right background area 1713d. Alternatively, the controller 450 may extend the intersections of the edges of the right reversal area 1721d and the edge of the right background area 1713d to the intersections of the dividing lines that extend from the center of the content image 1720 and the edge of the right background area 1713d in the right background area 1713d.

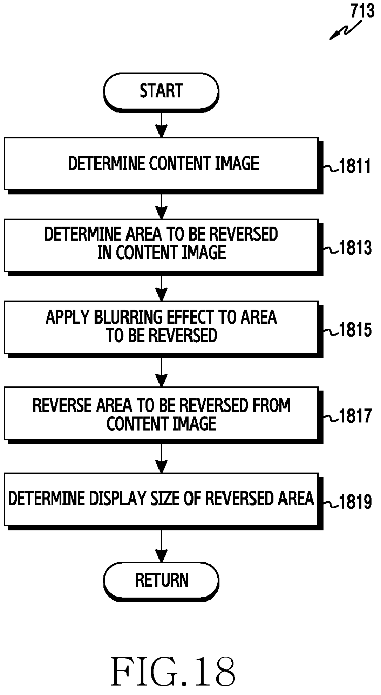

FIGS. 18 to 22 are flowcharts illustrating examples of the background image generating operation of FIG. 7, according to various embodiments of the present disclosure.

Referring to FIG. 18, the controller 450 may determine a content image 1220, 1320, 1420, 1520, 1620, or 1720 in operation 1811. The controller 450 may determine the content image 1220, 1320, 1420, 1520, 1620, or 1720 from content. In operation 1813, the controller 450 may determine at least one reversal area 1221, 1321, 1421, 1521, 1621, or 1721 in the content image 1220, 1320, 1420, 1520, 1620, or 1720. The controller 450 may determine at least one area of the content image 1220, 1320, 1420, 1520, 1620, or 1720 to be the reversal area 1221, 1321, 1421, 1521, 1621, or 1721.

In operation 1815, the controller 450 may apply a dimming effect to the reversal area 1221, 1321, 1421, 1521, 1621, or 1721. For example, the controller 450 may apply a blurring effect to the reversal area 1221, 1321, 1421, 1521, 1621, or 1721. Alternatively, the controller 450 may apply various post-processing effects, in addition to the blurring effect, to the reversal area 1221, 1321, 1421, 1521, 1621, or 1721. In operation 1817, the controller 450 may reverse the reversal area 1221, 1321, 1421, 1521, 1621, or 1721 from the content image 1220, 1320, 1420, 1520, 1620, or 1720. In operation 1819, the controller 450 may determine the display size of the reversal area 1221, 1321, 1421, 1521, 1621, or 1721. The controller 450 may adjust the reversal area 1221, 1321, 1421, 1521, 1621, or 1721. The controller 450 may enlarge or reduce the reversal area 1221, 1321, 1421, 1521, 1621, or 1721. Alternatively, the controller 450 may cut away a part of the reversal area 1221, 1321, 1421, 1521, 1621, or 1721. The controller 450 may return to FIG. 7.

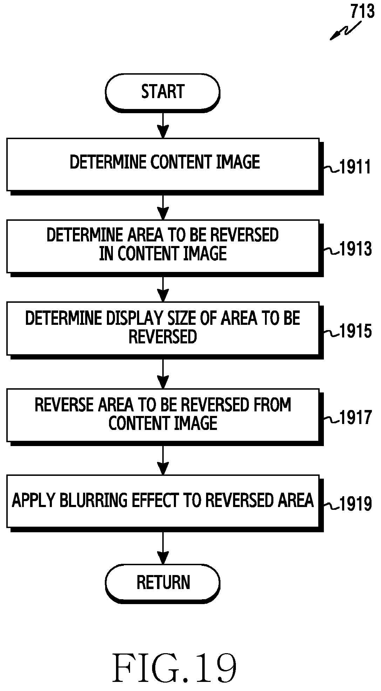

Referring to FIG. 19, the controller 450 may determine a content image 1220, 1320, 1420, 1520, 1620, or 1720 in operation 1911. The controller 450 may determine the content image 1220, 1320, 1420, 1520, 1620, or 1720 from the content. In operation 1913, the controller 450 may determine at least one reversal area 1221, 1321, 1421, 1521, 1621, or 1721 in the content image 1220, 1320, 1420, 1520, 1620, or 1720. The controller 450 may determine at least one area of the content image 1220, 1320, 1420, 1520, 1620, or 1720 to be the reversal area 1221, 1321, 1421, 1521, 1621, or 1721.

In operation 1915, the controller 450 may determine the display size of the reversal area 1221, 1321, 1421, 1521, 1621, or 1721. The controller 450 may adjust the reversal area 1221, 1321, 1421, 1521, 1621, or 1721. The controller 450 may enlarge or reduce the reversal area 1221, 1321, 1421, 1521, 1621, or 1721. Alternatively, the controller 450 may cut away a part of the reversal area 1221, 1321, 1421, 1521, 1621, or 1721. In operation 1917, the controller 450 may reverse the reversal area 1221, 1321, 1421, 1521, 1621, or 1721 from the content image 1220, 1320, 1420, 1520, 1620, or 1720. In operation 1919, the controller 450 may apply a dimming effect to the reversal area 1221, 1321, 1421, 1521, 1621, or 1721. For example, the controller 450 may apply a blurring effect to the reversal area 1221, 1321, 1421, 1521, 1621, or 1721. Alternatively, the controller 450 may apply various post-processing effects, in addition to the blurring effect, to the reversal area 1221, 1321, 1421, 1521, 1621, or 1721. The controller 450 may return to FIG. 7.

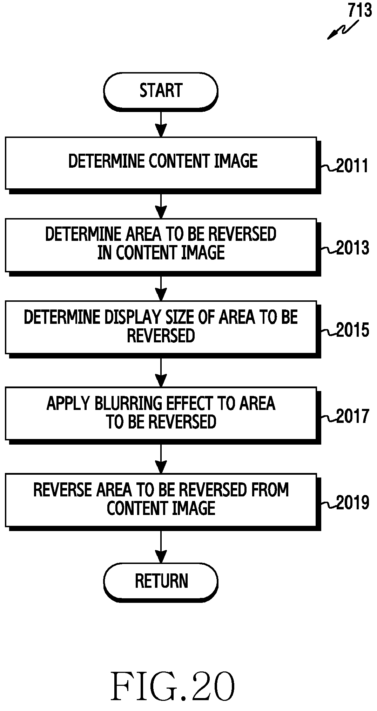

Referring to FIG. 20, the controller 450 may determine a content image 1220, 1320, 1420, 1520, 1620, or 1720 in operation 2011. The controller 450 may determine the content image 1220, 1320, 1420, 1520, 1620, or 1720 from content. In operation 2013, the controller 450 may determine at least one reversal area 1221, 1321, 1421, 1521, 1621, or 1721 in the content image 1220, 1320, 1420, 1520, 1620, or 1720. The controller 450 may determine at least one area of the content image 1220, 1320, 1420, 1520, 1620, or 1720 to be the reversal area 1221, 1321, 1421, 1521, 1621, or 1721.

In operation 2015, the controller 450 may determine the display size of the reversal area 1221, 1321, 1421, 1521, 1621, or 1721. The controller 450 may adjust the reversal area 1221, 1321, 1421, 1521, 1621, or 1721. The controller 450 may enlarge or reduce the reversal area 1221, 1321, 1421, 1521, 1621, or 1721. Alternatively, the controller 450 may cut away a part of the reversal area 1221, 1321, 1421, 1521, 1621, or 1721. In operation 2017, the controller 450 may apply a dimming effect to the reversal area 1221, 1321, 1421, 1521, 1621, or 1721. For example, the controller 450 may apply a blurring effect to the reversal area 1221, 1321, 1421, 1521, 1621, or 1721. Alternatively, the controller 450 may apply various post-processing effects, in addition to the blurring effect, to the reversal area 1221, 1321, 1421, 1521, 1621, or 1721. In operation 2019, the controller 450 may reverse the reversal area 1221, 1321, 1421, 1521, 1621, or 1721 from the content image 1220, 1320, 1420, 1520, 1620, or 1720. The controller 450 may return to FIG. 7.

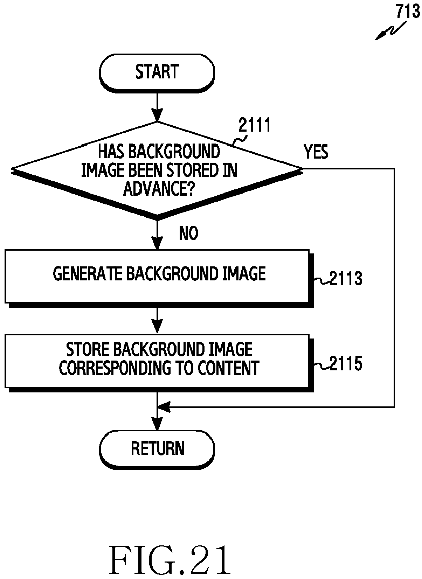

Referring to FIG. 21, in operation 2111, the controller 450 may determine whether a background image has been stored in advance. The controller 450 may determine whether a background image has been stored in advance such that the background image corresponds to content.

When it is determined in operation 2111 that no background image has been stored in advance, the controller 450 may generate a background image in operation 2113. The controller 450 may generate the background image from the content. To this end, the controller 450 may reverse at least one area of the content. The controller 450 may apply a blurring effect to at least one area of the content. In operation 2115, the controller 450 may store the background image such that the background image corresponds to the content. The controller 450 may return to FIG. 7.

When it is determined in operation 2111 that a background image has been stored in advance, the controller 450 may return to FIG. 7.

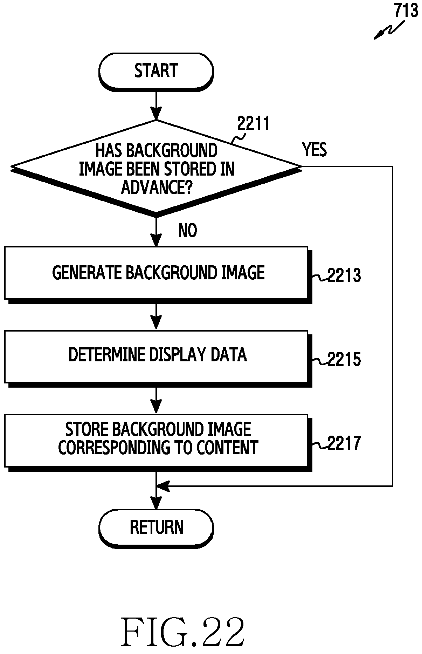

Referring to FIG. 22, in operation 2211, the controller 450 may determine whether a background image has been stored in advance. The controller 450 may determine whether a background image has been stored in advance such that the background image corresponds to content.

When it is determined in operation 2211 that no background image has been stored in advance, the controller 450 may generate a background image in operation 2213. The controller 450 may generate the background image such that the background image corresponds to a background area. The controller 450 may generate the background image from content. To this end, the controller 450 may reverse at least one area of the content. The controller 450 may apply a blurring effect to at least one area of the content.

In operation 2215, the controller 450 may determine display data. The controller 450 may determine the display data such that the display data corresponds to the content. The controller 450 may determine the display data on the basis of the background image. The controller 450 may determine at least one of the color and brightness of the display data on the basis of the background image. In operation 2217, the controller 450 may store the background image such that the background image corresponds to the content. The controller 450 may store the color and brightness of the display data such that the color and brightness of the display data correspond to the content. The controller 450 may return to FIG. 7.

When it is determined in operation 2211 that a background image has been stored in advance, the controller 450 may return to FIG. 7.

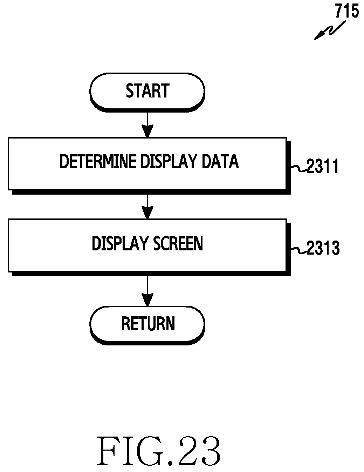

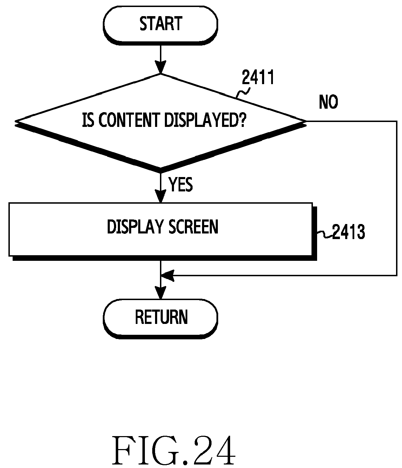

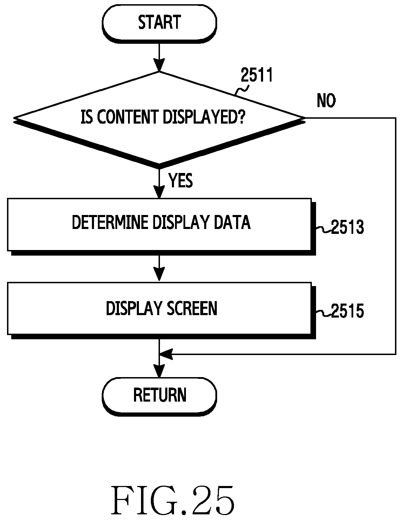

In operation 715, the controller 450 may display a screen. For example, when a background image is generated in response to the execution of a function, as illustrated in FIG. 8, or when a background image is generated in response to a request for displaying content, as illustrated in FIG. 9, the controller 450 may display a screen, as illustrated in FIG. 23. Alternatively, when a background image is generated in response to the generation of content, as illustrated in FIG. 10, the controller 450 may display a screen in response to a request for displaying content, as illustrated in FIGS. 24 and 25. The controller 450 may configure the screen with the content and the background image. The controller 450 may display the content and the background image on the screen. The controller 450 may additionally display, on the screen, display data. FIGS. 23 to 25 are flowcharts illustrating an operation of displaying a screen, according to various embodiments of the present disclosure.

Referring to FIG. 23, the controller 450 may determine display data in operation 2311. The controller 450 may determine the display data such that the display data corresponds to content. The controller 450 may determine the display data on the basis of a background image. The controller 450 may determine at least one of the color and brightness of the display data on the basis of the background image. In operation 2313, the controller 450 may display a screen. The controller 450 may configure the screen with the content, the background image, and the display data. The controller 450 may display the content, the background image, and the display data on the screen. The controller 450 may return to FIG. 7.

Referring to FIG. 24, when a request for displaying content is received, the controller 450 may detect the request in operation 2411. The controller 450 may receive the request for displaying content from the communication unit 410 or the input unit 430. For example, when an item corresponding to the content is selected, the controller 450 may detect the request for displaying the content. In this way, the controller 450 may determine the content and the background image. The controller 450 may display a screen in operation 2413. The controller 450 may configure the screen with the content and the background image. The controller 450 may display the content and the background image on the screen. The controller 450 may return to FIG. 7.

Referring to FIG. 25, when a request for displaying content is received, the controller 450 may detect the request in operation 2511. The controller 450 may receive the request for displaying content from the communication unit 410 or the input unit 430. For example, when an item corresponding to the content is selected, the controller 450 may detect the request for displaying the content. In this way, the controller 450 may determine the content and the background image. In operation 2513, the controller 450 may determine display data. The controller 450 may determine the display data such that the display data corresponds to the content. The controller 450 may determine the display data on the basis of the background image. The controller 450 may determine at least one of the color and brightness of the display data on the basis of the background image. The controller 450 may display a screen in operation 2515. The controller 450 may configure the screen with the content, the background image, and the display data. The controller 450 may display the content, the background image, and the display data on the screen. The controller 450 may return to FIG. 7.

In the screen display method of the electronic device 400, according to the embodiments of the present disclosure, a background image may be generated from content. In the screen display method of the electronic device 400, according to the embodiments of the present disclosure, a background image is generated by applying a blurring effect to at least one area of content so that the content and the background image can be distinguished from each other. In the screen display method of the electronic device 400, according to the embodiments of the present disclosure, a background image is generated by reversing at least one area of content so that it is possible to determine the color and contrast of the background image using the color and contrast of the content. Accordingly, the screen display method of the electronic device 400, according to the embodiments of the present disclosure, can reduce a sense of difference between the content and a background image on a screen. In addition, the screen display method of the electronic device 400, according to the embodiments of the present disclosure, can prevent the border between the content and a background image from being clearly visible on a screen.

A method of displaying a screen in an electronic device, according to various embodiments of the present disclosure, may include: determining content; generating a blurred background image by reversing at least one area of the content from the content; and displaying the content and the background image on the screen.

According to various embodiments of the present disclosure, generating the background image may include: reversing at least one area of the content from the content; and applying a blurring effect to the at least one area of the content.

According to various embodiments of the present disclosure, generating the background image may include: applying a blurring effect to the at least one area of the content; and reversing the at least one area of the content from the content.

According to various embodiments of the present disclosure, the screen may include: a content area for displaying the content; and a background area for displaying the background image, wherein the background area abuts the content area.

According to various embodiments of the present disclosure, generating the background image may include determining the size of the at least one area of the content such that the size of the at least one area of the content corresponds to the size of the background area.

According to various embodiments of the present disclosure, determining the size may include at least one of enlarging the at least one area of the content, reducing the at least one area of the content, and cutting away the at least one area of the content.

According to various embodiments of the present disclosure, generating the background image may include storing the background image such that the background image corresponds to the content.

According to various embodiments of the present disclosure, generating the background image may include: determining display data to be displayed in the background area such that the display data corresponds to the content; and determining at least one of the color and brightness of the display data on the basis of the background image.

According to various embodiments of the present disclosure, determining the content may include determining the content according to an executed function.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1. A method of displaying a screen in an electronic device the method comprising:

   determining content;
   generating a blurred background image by reversing at least one area of the content from the content; and
   displaying the content and the background image on the screen.

2. The method of claim 1, wherein the generating of the background image comprises:

   reversing the at least one area of the content from the content; and
   applying a blurring effect to the at least one area of the content.

3. The method of claim 1, wherein the generating of the background image comprises:

   applying a blurring effect to the at least one area of the content; and
   reversing the at least one area of the content from the content.

4. The method of claim 1, wherein the screen comprises a content area for displaying the content and a background area for displaying the background image, wherein the background area abuts the content area.

5. The method of claim 4, wherein the generating of the background image comprises:

   determining a size of the at least one area of the content such that the size of the at least one area of the content corresponds to a size of the background area, and
   wherein the determining of the size comprises at least one of enlarging the at least one area of the content, reducing the at least one area of the content, and cutting away the at least one area of the content.

6. The method of claim 1, wherein the generating comprises:

   storing the background image such that the background image corresponds to the content.

7. The method of claim 4, wherein the generating comprises:

   determining display data to be displayed in the background area such that the display data corresponds to the content; and
   determining at least one of the color and brightness of the display data on basis of the background image.

8. An electronic device comprising:

   a display;
   a processor electrically connected to the display; and
   a memory electrically connected to the processor,
   wherein the memory stores instructions are configured to, when executed by the processor, cause the processor to control to:

      generate a second image that has a mirror image for a part of a first image stored in the memory, and the generated second image is subjected to blurring;
      display the first image on a part of a screen of the display; and
      display the second image on a part of the screen of the display such that the second image abuts at least a part of an edge of the displayed first image.

9. The electronic device of claim 8, wherein the part of the first image abuts, or is adjacent to, the part of the edge of the first image, and
   wherein the mirror image is symmetric to the part of the first image horizontally, vertically, or diagonally, or with respect to a curve.

10. The electronic device of claim 8, wherein the instructions are configured to, when executed by the processor, cause the processor to control to:

display the part of the first image on a substantially central portion of the screen; and
display the second image on the screen such that the second image abuts, or is adjacent to, the first image.

**11.** The electronic device of claim 8, wherein the instructions are configured to, when executed by the processor, cause the processor to control to:

form a mirror image for the part of the first image; and
generate the second image by blurring the mirror image.

**12.** The electronic device of claim 8, wherein the instructions are configured to, when executed by the processor, cause the processor to control to:

blur the part of the first image; and
generate the second image by forming a mirror image for the blurred part.

**13.** The electronic device of claim 8, wherein the instructions configured to, when executed by the processor, cause the processor to control to:

enlarge at least a part of the second image; and
display the enlarged part of the second image on a part of the screen of the display such that the enlarged part of the second image abuts at least a part of the edge of the displayed first image.

**14.** The electronic device of claim 8, wherein the instructions are configured to, when executed by the processor, cause the processor to control to perform at least one of enlarging at least one area of content, reducing the at least one area of the content, and cutting away the at least one area of the content.

**15.** The electronic device of claim 8, wherein the instructions are configured to, when executed by the processor, cause the processor to control to:

determine display data to be displayed in a background area such that the display data corresponds to content; and
determine at least one of the color and brightness of the display data on the basis of a background image.

FIG.1

FIG.2

SENSOR MODULE 240
- GESTURE SENSOR 240A
- GYRO SENSOR 240B
- ATMOSPHERIC PRESSURE SENSOR 240C
- MAGNETIC SENSOR 240D
- ACCELERATION SENSOR 240E
- GRIP SENSOR 240F
- PROXIMITY SENSOR 240G
- RGB SENSOR 240H
- BIOMETRIC SENSOR 240I
- TEMPERATURE/HUMIDITY SENSOR 240J
- LIGHT SENSOR 240K
- UV SENSOR 240M

INTERFACE 270
- HDMI 272
- USB 274
- OPTICAL INTERFACE 276
- D-SUB 278

DISPLAY 260
- PANEL 262
- HOLOGRAM DEVICE 264
- PROJECTOR 266

INPUT DEVICE 250
- TOUCH PANEL 252
- PEN SENSOR 254
- KEY 256
- ULTRASONIC INPUT DEVICE 258

COMMUNICATION MODULE 220
- CELLULAR MODULE 221
- WIFI MODULE 223
- BT MODULE 225
- GPS MODULE 227
- NFC MODULE 228
- RF MODULE 229
- SIM CARD 224

APPLICATION PROCESSOR (AP) 210

POWER MANAGEMENT MODULE 295
BATTERY 296
MOTOR 298
INDICATOR 297
CAMERA MODULE 291

AUDIO MODULE 280
- MICROPHONE 288
- EARPHONE 286
- RECEIVER 284
- SPEAKER 282

MEMORY 230
- INTERNAL MEMORY 232
- EXTERNAL MEMORY 234

ELECTRONIC DEVICE 201

## 310

### APPLICATION 370

| HOME 371 | DIALER 372 | SMS/MMS 373 | IM 374 | BROWSER 375 | CAMERA 376 | ALARM 377 |
|---|---|---|---|---|---|---|
| CONTACT 378 | VOICE DIAL 379 | E-MAIL 380 | CALENDAR 381 | MEDIA PLAYER 382 | ALBUM 383 | WATCH 384 |

### API 360

### MIDDLEWARE 330

| APPLICATION MANAGER 341 | WINDOW MANAGER 342 | MULTIMEDIA MANAGER 343 | RESOURCE MANAGER 344 | |
|---|---|---|---|---|
| POWER MANAGER 345 | DATABASE MANAGER 346 | PACKAGE MANAGER 347 | CONNECTIVITY MANAGER 348 | RUNTIME LIBRARY 335 |
| NOTIFICATION MANAGER 349 | LOCATION MANAGER 350 | GRAPHIC MANAGER 351 | SECURITY MANAGER 352 | |

### KERNEL 320

| SYSTEM RESOURCE MANAGER 321 | DEVICE DRIVER 323 |
|---|---|

## FIG.3

EP 3 096 313 A1

**400**

**CONTROLLER** 450

**COMMUNICATION UNIT** 410

**DISPLAY UNIT** 420

**FUNCTION PROCESSING UNIT** 460

**SCREEN PROCESSING UNIT** 461

**STORAGE UNIT** 440

**CONTENT PROCESSING UNIT** 463

**INPUT UNIT** 430

**BACKGROUND IMAGE PROCESSING UNIT** 465

# FIG.4

FIG.5

FIG.6

```
         ┌─────────┐
         │  START  │
         └────┬────┘
              │
              ▼
    ┌──────────────────────┐
    │  DETERMINE CONTENT   │ ～711
    └──────────┬───────────┘
               │
               ▼
    ┌──────────────────────┐
    │ GENERATE BACKGROUND  │ ～713
    │        IMAGE         │
    └──────────┬───────────┘
               │
               ▼
    ┌──────────────────────┐
    │    DISPLAY SCREEN    │ ～715
    └──────────┬───────────┘
               │
               ▼
         ┌─────────┐
         │   END   │
         └─────────┘
```

FIG.7

711

```
        ┌─────────┐
        │  START  │
        └─────────┘
             │
             │         811
             ▼          │
        ◇ IS FUNCTION EXECUTED? ◇────NO────┐
             │                             │
            YES                            │
             ▼                             │
  ┌────────────────────────────────┐       │
  │ DETERMINE CONTENT CORRESPONDING│~ 813  │
  │         TO FUNCTION            │       │
  └────────────────────────────────┘       │
             │                             │
             ▼                             │
  ┌────────────────────────────────┐       │
  │ DETERMINE DISPLAY SIZE OF      │~ 815  │
  │         CONTENT                │       │
  └────────────────────────────────┘
             │
             ▼
        ┌─────────┐
        │ RETURN  │
        └─────────┘
```

# FIG.8

711

```
        ┌─────────┐
        │  START  │
        └────┬────┘
             │
             ▼ ◄──────────────────────┐
          ╱─────╲        911           │
        ╱─────────╲      NO            │
       ◄ IS CONTENT  ►─────────────────┘
        ╲ DISPLAYED?╱
          ╲─────╱
             │ YES
             ▼
  ┌───────────────────────────────┐
  │ DETERMINE DISPLAY SIZE OF     │ ~ 913
  │ CONTENT                       │
  └───────────────┬───────────────┘
                  │
                  ▼
            ┌──────────┐
            │  RETURN  │
            └──────────┘
```

# FIG.9

711

START

1011

IS CONTENT GENERATED? → NO

YES

DETERMINE DISPLAY SIZE OF CONTENT — 1013

RETURN

FIG.10

713

```
            ┌─────────────┐
            │    START    │
            └──────┬──────┘
                   ▼
    ┌──────────────────────────────┐
    │  DETERMINE CONTENT IMAGE     │──1111
    └──────────────┬───────────────┘
                   ▼
    ┌──────────────────────────────┐
    │  DETERMINE AREA TO BE REVERSED│──1113
    │      IN CONTENT IMAGE        │
    └──────────────┬───────────────┘
                   ▼
    ┌──────────────────────────────┐
    │   REVERSE AREA TO BE REVERSED │──1115
    │      FROM CONTENT IMAGE      │
    └──────────────┬───────────────┘
                   ▼
    ┌──────────────────────────────┐
    │ APPLY BLURRING EFFECT TO REVERSED AREA │──1117
    └──────────────┬───────────────┘
                   ▼
    ┌──────────────────────────────┐
    │DETERMINE DISPLAY SIZE OF REVERSED AREA│──1119
    └──────────────┬───────────────┘
                   ▼
            ┌─────────────┐
            │   RETURN    │
            └─────────────┘
```

# FIG.11

FIG.12A      FIG.12B      FIG.12C

EP 3 096 313 A1

FIG.13A

FIG.13B

FIG.13C

FIG.14A

FIG.14B

FIG.14C

FIG.14D

FIG.14E

FIG.14F

EP 3 096 313 A1

FIG.15A

FIG.15B

FIG.15C

EP 3 096 313 A1

FIG.16A

FIG.16B

FIG.16C

FIG.16D

FIG.17A

FIG.17B

FIG.17C

713

```
            ┌─────────────┐
            │    START    │
            └─────────────┘
                   │
                   ▼
        ┌───────────────────────────┐
        │  DETERMINE CONTENT IMAGE  │────1811
        └───────────────────────────┘
                   │
                   ▼
        ┌───────────────────────────┐
        │ DETERMINE AREA TO BE REVERSED │────1813
        │      IN CONTENT IMAGE     │
        └───────────────────────────┘
                   │
                   ▼
        ┌───────────────────────────┐
        │  APPLY BLURRING EFFECT TO AREA │────1815
        │      TO BE REVERSED       │
        └───────────────────────────┘
                   │
                   ▼
        ┌───────────────────────────┐
        │ REVERSE AREA TO BE REVERSED FROM │────1817
        │      CONTENT IMAGE        │
        └───────────────────────────┘
                   │
                   ▼
        ┌───────────────────────────┐
        │ DETERMINE DISPLAY SIZE OF REVERSED AREA │────1819
        └───────────────────────────┘
                   │
                   ▼
            ┌─────────────┐
            │   RETURN    │
            └─────────────┘
```

FIG.18

713

START

DETERMINE CONTENT IMAGE — 1911

DETERMINE AREA TO BE REVERSED
IN CONTENT IMAGE — 1913

DETERMINE DISPLAY SIZE OF AREA TO BE
REVERSED — 1915

REVERSE AREA TO BE REVERSED FROM
CONTENT IMAGE — 1917

APPLY BLURRING EFFECT TO REVERSED AREA — 1919

RETURN

FIG.19

713

START

DETERMINE CONTENT IMAGE ~2011

DETERMINE AREA TO BE REVERSED
IN CONTENT IMAGE ~2013

DETERMINE DISPLAY SIZE OF AREA TO BE
REVERSED ~2015

APPLY BLURRING EFFECT TO AREA
TO BE REVERSED ~2017

REVERSE AREA TO BE REVERSED FROM
CONTENT IMAGE ~2019

RETURN

FIG.20

713

```
        ┌──────────┐
        │  START   │
        └──────────┘
             │
             ▼
        ◇─────────◇         2111
       ╱ HAS BACKGROUND ╲
      ╱ IMAGE BEEN STORED IN ╲───── YES ──────┐
      ╲     ADVANCE?     ╱                     │
       ╲───────────────╱                       │
             │                                 │
            NO                                 │
             ▼                                 │
   ┌────────────────────────────┐             │
   │ GENERATE BACKGROUND IMAGE  │~2113        │
   └────────────────────────────┘             │
             │                                 │
             ▼                                 │
   ┌────────────────────────────┐             │
   │  STORE BACKGROUND IMAGE    │~2115        │
   │ CORRESPONDING TO CONTENT   │             │
   └────────────────────────────┘             │
             │◄────────────────────────────────┘
             ▼
        ┌──────────┐
        │  RETURN  │
        └──────────┘
```

# FIG.21

713

```
                    ┌─────────────┐
                    │    START    │
                    └──────┬──────┘
                           │
                           ▼
                    ╱─────────────╲    2211
                   ╱ HAS BACKGROUND ╲
         ┌────────▶ IMAGE BEEN STORED IN ─── YES ──┐
         │        ╲    ADVANCE?    ╱               │
         │         ╲─────────────╱                 │
         │                │                        │
         │               NO                        │
         │                ▼                        │
         │   ┌──────────────────────────┐          │
         │   │ GENERATE BACKGROUND IMAGE │  2213    │
         │   └─────────────┬────────────┘          │
         │                 │                        │
         │                 ▼                        │
         │   ┌──────────────────────────┐          │
         │   │  DETERMINE DISPLAY DATA   │  2215    │
         │   └─────────────┬────────────┘          │
         │                 │                        │
         │                 ▼                        │
         │   ┌──────────────────────────┐          │
         │   │   STORE BACKGROUND IMAGE  │  2217    │
         │   │ CORRESPONDING TO CONTENT  │          │
         │   └─────────────┬────────────┘          │
         │                 │◀───────────────────────┘
         │                 ▼
         │          ┌─────────────┐
         │          │   RETURN    │
         │          └─────────────┘
```

# FIG.22

715

```
        ┌─────────────┐
        │    START    │
        └──────┬──────┘
               │
               ▼
   ┌───────────────────────────┐
   │  DETERMINE DISPLAY DATA    │──2311
   └─────────────┬─────────────┘
                 │
                 ▼
   ┌───────────────────────────┐
   │      DISPLAY SCREEN        │──2313
   └─────────────┬─────────────┘
                 │
                 ▼
        ┌─────────────┐
        │    RETURN    │
        └─────────────┘
```

# FIG.23

START

2411

IS CONTENT DISPLAYED? —— NO

YES

DISPLAY SCREEN ~2413

RETURN

FIG.24

START

IS CONTENT DISPLAYED? ~ 2511

NO

YES

DETERMINE DISPLAY DATA ~2513

DISPLAY SCREEN ~2515

RETURN

FIG.25

Europäisches
Patentamt

European
Patent Office

Office européen
des brevets

# EUROPEAN SEARCH REPORT

**Application Number**

EP 16 17 0407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Video graphics in Pillar bars with 4:3 video in a 16:9 project", , 13 June 2010 (2010-06-13), XP055300958, Retrieved from the Internet: URL:http://forum.videohelp.com/threads/322 078-Video-graphics-in-Pillar-bars-with-4-3 -video-in-a-16-9-project [retrieved on 2016-09-08] * the whole document * | 1-6,8-14 | INV. G09G5/00 |
| A | McShane's Edits ¦ Free Video Editor: "Sony Vegas Pro 12 Tutorial ¦ Ep. 2 ¦ Side Bar Blur Effect", youtube, 8 September 2013 (2013-09-08), page 1 pp., XP054976769, Retrieved from the Internet: URL:https://www.youtube.com/watch?v=91869t YYBGc&feature=youtu.be [retrieved on 2013-09-08] * the whole document * | 1-15 | |
| A | US 2009/002397 A1 (FORLINES CLIFTON L [US] ET AL) 1 January 2009 (2009-01-01) * paragraphs [0001], [0004] - [0016], [0049] - [0068] * | 1-15 | TECHNICAL FIELDS SEARCHED (IPC) G09G H04N |
| T | CN 105 373 363 A (MEIZU SCIENCE & TECH CO LTD) 2 March 2016 (2016-03-02) * figure 4C * | | |

The present search report has been drawn up for all claims

| Place of search | Date of completion of the search | Examiner |
|---|---|---|
| Munich | 13 September 2016 | Taron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 0407

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2016

| Patent document cited in search report | | Publication date | Patent family member(s) | | Publication date |
|---|---|---|---|---|---|
| US 2009002397 | A1 | 01-01-2009 | JP | 4864038 B2 | 25-01-2012 |
| | | | JP | 2009009101 A | 15-01-2009 |
| | | | US | 2009002397 A1 | 01-01-2009 |
| CN 105373363 | A | 02-03-2016 | NONE | | |

For more details about this annex : see Official Journal of the European Patent Office, No. 12/82